# EUROPEAN PATENT APPLICATION

(11) **EP 4 610 583 A1**
(43) Date of publication of application: **03.09.2025**
(21) Application number: 23912133.8
(22) Date of filing: 26.12.2023
(51) Int. Cl.: F25D 11/00, F25D 17/08, F25D 23/06

(54) **REFRIGERATED CONTAINER**

(30) Priority: 28.12.2022 JP 2022211782; 15.12.2023 JP 2023212162
(71) Applicant: Mitsubishi Heavy Industries, Ltd., Tokyo 100-8332 (JP)
(72) Inventor: YOSHIDA, Kazuki, Tokyo 100-8332 (JP); TAKATA, Ryo, Tokyo 100-8332 (JP)
(74) Representative: Studio Torta S.p.A.
(86) International application number: PCT/JP2023/046636
(87) International publication number: WO 2024/143354

(57) **Abstract**

This refrigerated container comprises: a container body internally including a refrigeration space that is to be cooled; a refrigerator configured to be capable of cooling a recirculating gas that is sucked in from the refrigeration space; a refrigerator casing which is disposed inside the container body and which internally includes a refrigerator accommodating space for accommodating the refrigerator; and a thermally insulating material which is layered on an outer wall surface of the refrigerator casing. An outlet flow passage which connects the refrigerator accommodating space and the refrigeration space and which guides the recirculating gas cooled by the refrigerator into the refrigeration space via a blowout port is formed inside the thermally insulating material.

## Description

### Technical Field

The present disclosure relates to a refrigerated container.

The present application claims priority based on Japanese Patent Application No. 2022-211782 filed in Japan on December 28, 2022 and Japanese Patent Application No. 2023-212162 filed in Japan on December 15, 2023, the contents of which are incorporated herein by reference.

### Background Art

A refrigerated container is a container provided with a refrigeration function of freezing or refrigerating articles such as cargo accommodated in the container.

PTL 1 discloses an air refrigerant refrigerating apparatus including a freezing chamber that forms a refrigeration space, a compressor that suctions air in the freezing chamber and adiabatically compresses the air, a primary cooler that cools the compressed air by exchanging heat with a cooling fluid, and an expander that adiabatically expands the cooling-compressed air. In this air refrigerant refrigerating apparatus, the refrigeration space is partitioned into two communicating spaces via a heat insulating material, one space serves as an action space for cooling an object to be cooled, the other space serves as a discharge space for discharging air used for cooling, and low-temperature air obtained by the expander is supplied to the freezing chamber to form the refrigeration space.

### Citation List

### Patent Literature

[PTL 1] Japanese Unexamined Patent Application Publication No. 2008-180449

### Summary of Invention

### Technical Problem

In PTL 1, since a heat exchanger that can be a heat source is disposed inside the refrigeration space, there is a concern that the heat insulation performance of the freezing chamber may be deteriorated. When the heat insulation performance of the freezing chamber is low, since it is necessary to increase the thickness of the heat insulating material provided on an inner surface of the freezing chamber, there is a problem in that the refrigeration space becomes small.

In view of the above circumstances, an object of at least one embodiment of the present disclosure is to provide a refrigerated container capable of improving heat insulation performance of a refrigeration space.

### Solution to Problem

A refrigerated container according to at least one embodiment of the present disclosure includes:
a container body having a refrigeration space to be cooled inside;
a refrigerator configured to cool a circulation gas suctioned from the refrigeration space;
a refrigerator casing disposed inside the container body and having a refrigerator accommodation space for accommodating the refrigerator inside; and
a heat insulating material laminated on an outer wall surface of the refrigerator casing, in which
an outlet flow path for connecting the refrigerator accommodation space and the refrigeration space to each other and guiding the circulation gas cooled in the refrigerator to the refrigeration space via a discharge port is formed inside the heat insulating material.

### Advantageous Effects of Invention

According to at least one embodiment of the present disclosure, there is provided a refrigerated container capable of improving heat insulation performance of a refrigeration space.

### Brief Description of Drawings

Fig. 1 is a schematic perspective view of a refrigerated container according to an embodiment of the present disclosure.
Fig. 2 is a schematic cross-sectional view of a container body of the refrigerated container according to the embodiment of the present disclosure taken along a longitudinal direction.
Fig. 3 is a schematic cross-sectional view of the container body of the refrigerated container according to the embodiment of the present disclosure taken along the longitudinal direction.
Fig. 4 is a view schematically showing a circuit of a refrigerator of the refrigerated container according to the embodiment of the present disclosure.
Fig. 5 is a view of a refrigerator casing of the refrigerated container according to the embodiment of the present disclosure as viewed from a direction indicated by an arrow A in Fig. 1.
Fig. 6 is a schematic perspective view of the refrigerator casing and a heat insulating material of the refrigerated container according to the embodiment of the present disclosure.
Fig. 7 is a schematic perspective view of the refrigerator casing and the heat insulating material of the refrigerated container according to the embodiment of the present disclosure.
Fig. 8 is a schematic perspective view of the refrigerator casing and the heat insulating material of the refrigerated container according to the embodiment of the present disclosure.
Fig. 9 is a schematic view of a metal filter according to the embodiment of the present disclosure.
Fig. 10 is a schematic cross-sectional view of a laying member laid in the refrigerated container according to the embodiment of the present disclosure taken along a direction orthogonal to a longitudinal direction of the container body.
Fig. 11 is a description view for describing a discharge port and a suction port of the refrigerated container according to the embodiment of the present disclosure.
Fig. 12 is a description view for describing the discharge port and the suction port of the refrigerated container according to the embodiment of the present disclosure.
Fig. 13 is a description view for describing the discharge port and the suction port of the refrigerated container according to the embodiment of the present disclosure.
Fig. 14 is a description view for describing a metal plate, a water-repellent layer, and a waterproof layer of the refrigerated container according to the embodiment of the present disclosure.
Fig. 15 is a description view for describing an outlet flow path side metal plate, an outlet flow path side water-repellent layer, and an outlet flow path side waterproof layer of the refrigerated container according to the embodiment of the present disclosure.
Fig. 16 is a description view for describing an inlet flow path side metal plate, an inlet flow path side water-repellent layer, and an inlet flow path side waterproof layer of the refrigerated container according to the embodiment of the present disclosure.
Fig. 17 is a schematic cross-sectional view of a container body of a refrigerated container according to another embodiment taken along a longitudinal direction.
Fig. 18 is a view for describing a peripheral structure of an outlet flow path according to another embodiment.
Fig. 19 is a schematic cross-sectional view of a laying member laid in the refrigerated container according to another embodiment taken along a direction orthogonal to a longitudinal direction of the container body.
Fig. 20 is a schematic view (as viewed from a front) showing a configuration of an inlet flow path forming portion according to another embodiment.
Fig. 21 is a schematic view (as viewed from a side) showing a configuration of the inlet flow path forming portion according to another embodiment.
Fig. 22 is a schematic view (as viewed from a side) showing a configuration of an inlet flow path forming portion according to a modification example of another embodiment.
Fig. 23 is a view for describing the disposition of two facing surface heat insulating materials according to another embodiment.

### Description of Embodiments

Hereinafter, some embodiments of the present disclosure will be described with reference to the accompanying drawings. However, dimensions, materials, shapes, and relative dispositions of components described as the embodiments or illustrated in the drawings are not intended to limit the scope of the present disclosure, and are merely examples for describing the present disclosure.

### (Refrigerated Container)

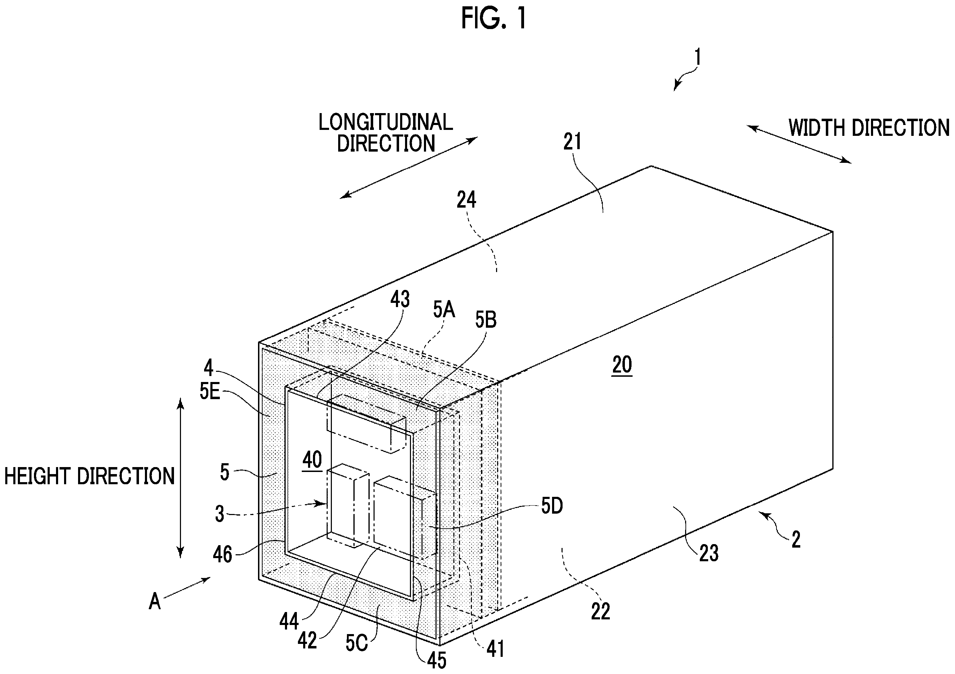

Fig. 1 is a schematic perspective view of a refrigerated container 1 according to an embodiment of the present disclosure. As shown in Fig. 1, the refrigerated container 1 is provided with a container body 2 having a refrigeration space 20 to be cooled inside. The refrigeration space 20 can accommodate articles such as cargo. The refrigerated container 1 is configured to cool a gas such as air present in the refrigeration space 20. Specifically, the refrigerated container 1 is further provided with a refrigerator 3 for cooling the gas in the refrigeration space 20.

### (Container Body)

As shown in Fig. 1, the container body 2 has a plurality of walls 21 to 24 and is formed in a rectangular tubular shape extending along a longitudinal direction of the container body 2. Hereinafter, a horizontal direction orthogonal to the longitudinal direction of the container body 2 is defined as a width direction of the container body 2. The plurality of walls 21 to 24 include a ceiling wall 21 that extends along a direction orthogonal to a height direction of the container body 2, a bottom wall 22 that extends along the direction orthogonal to the height direction of the container body 2 below the ceiling wall 21, and a pair of long side walls 23 and 24 that are disposed at intervals from each other and each connect the ceiling wall 21 and the bottom wall 22.

The container body 2 may be a transport container used for transporting cargo or the like. The container body 2 may be a standard transport container such as a 10 ft container, a 20 ft container, or a 40 ft container.

### (Refrigerator Casing)

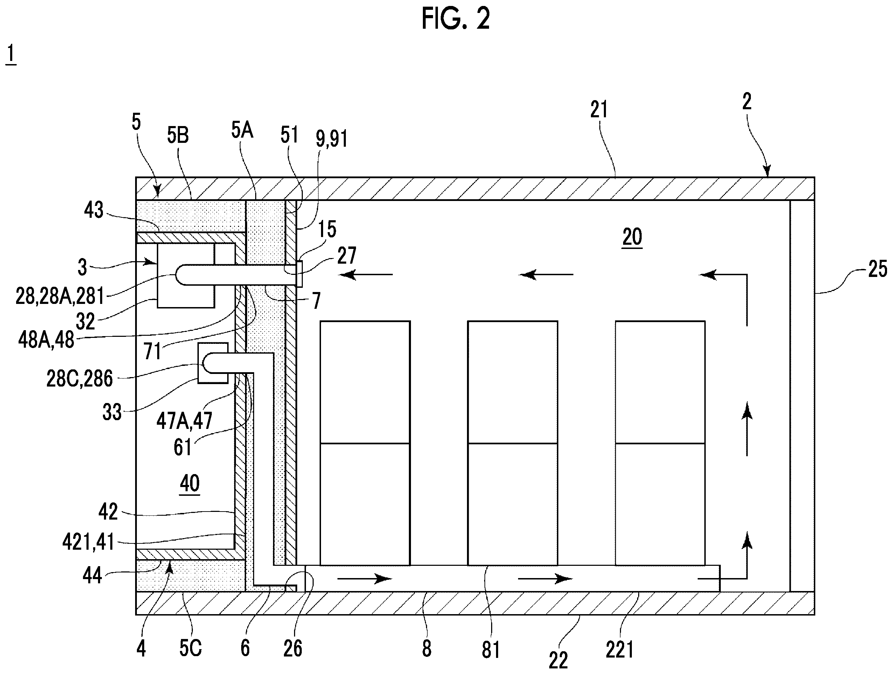

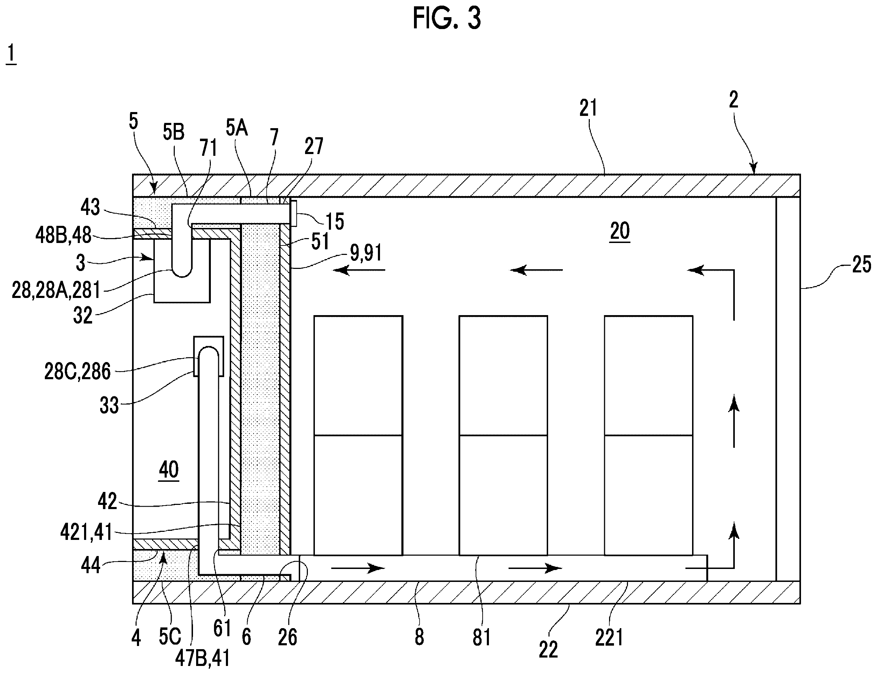

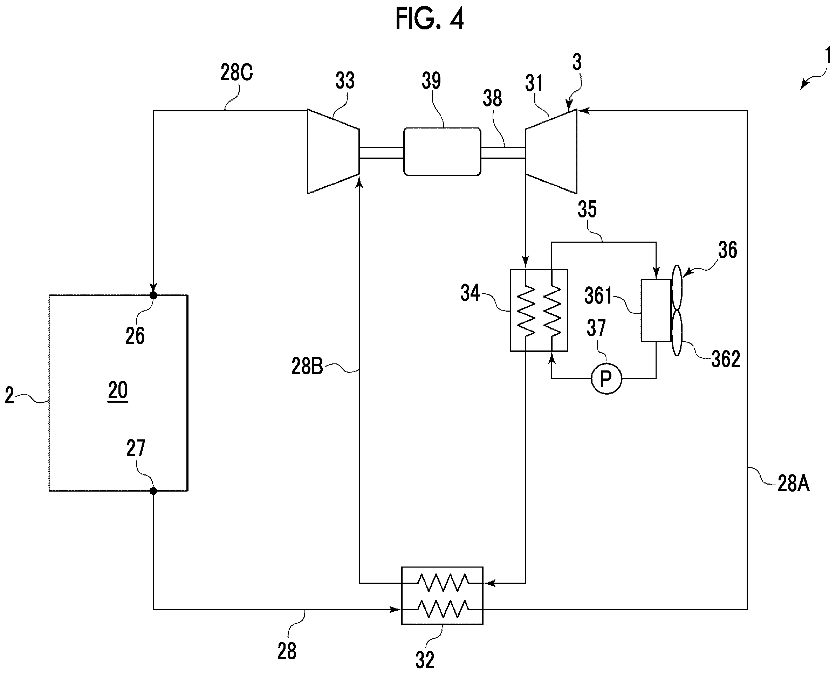

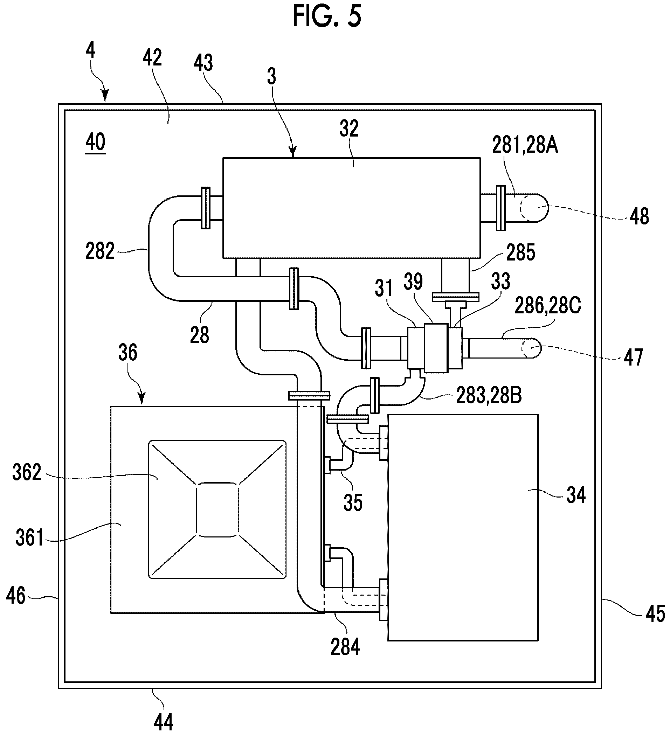

Figs. 2 and 3 are schematic cross-sectional views of the container body 2 of the refrigerated container 1 according to the embodiment of the present disclosure taken along the longitudinal direction. Fig. 4 is a view schematically showing a circuit of the refrigerator 3 of the refrigerated container 1 according to the embodiment of the present disclosure. Fig. 5 is a view of a refrigerator casing 4 of the refrigerated container 1 according to the embodiment of the present disclosure as viewed from a direction indicated by an arrow A in Fig. 1. As shown in Figs. 1 to 3, the refrigerated container 1 is further provided with the refrigerator 3 and the refrigerator casing 4 that is disposed inside the container body 2 and has a refrigerator accommodation space 40 for accommodating the refrigerator 3 inside.

In the embodiment shown in Figs. 2 and 3, the refrigerator casing 4 is disposed in an opening portion formed on one side (left side in Figs. 2 and 3) in the longitudinal direction of the container body 2. The refrigerated container 1 is further provided with a door 25 configured to be opened and closed, which is disposed in an opening portion formed on the other side (right side in Figs. 2 and 3) in the longitudinal direction of the container body 2. By opening the door 25, it is possible to move articles such as cargo or people between the outside of the container body 2 and the refrigeration space 20.

### (Refrigerator)

The refrigerator 3 is configured to cool a circulation gas that is a gas suctioned from the refrigeration space 20 via a suction port 27 (opening) for suctioning a gas such as air in the refrigeration space 20. The gas (circulation gas) cooled by the refrigerator 3 is returned to the refrigeration space 20 via a discharge port 26 (opening) for blowing out a gas such as air to the refrigeration space 20. As shown in Figs. 4 and 5, the refrigerator 3 includes a compressor 31, a heat exchanger 32, and an expander 33. As shown in Figs. 2 to 5, the refrigerated container 1 is provided with a circulation line 28 having the discharge port 26 and the suction port 27 described above. Each of the compressor 31, the heat exchanger 32, and the expander 33 is provided in the circulation line 28. The circulation line 28, the compressor 31, the heat exchanger 32, and the expander 33 configure a refrigerating cycle that extracts an internal gas, which is a gas inside the refrigeration space 20 and uses the internal gas as a heat medium. The temperature of the internal gas in the refrigerated container 1 can be adjusted by the refrigerator 3. In the illustrated embodiment, the temperature of the internal gas in the refrigerator 3 can be extremely low (-40°C or lower and -120°C or higher, preferably -80°C or lower).

### (Compressor)

The circulation line 28 is a passage extending from the suction port 27 to the discharge port 26, and the circulation gas suctioned from the refrigeration space 20 via the suction port 27 flows through the circulation line 28. The compressor 31 is configured to compress a gas (circulation gas) suctioned from the refrigeration space 20 via the suction port 27. By driving the compressor 31, a gas (internal gas) inside the refrigeration space 20 is suctioned to the circulation line 28 via the suction port 27. The circulation gas compressed in the compressor 31 is higher in temperature and pressure than before being introduced into the compressor 31 to become a high-temperature and high-pressure gas.

The heat exchanger 32 is configured to cool the high-temperature and high-pressure circulation gas compressed in the compressor 31. The expander 33 is configured to expand the circulation gas cooled by the heat exchanger 32. The low-temperature circulation gas expanded in the expander 33 is guided to the discharge port 26 by the circulation line 28, and is blown out from the circulation line 28 to the refrigeration space 20 via the discharge port 26.

The circulation line 28 includes a suction gas line 28A for guiding the circulation gas suctioned from the suction port 27 to the compressor 31, a compressed gas line 28B for guiding the circulation gas compressed in the compressor 31 to the expander 33, and an expansion gas line 28C for guiding the circulation gas expanded in the expander 33 to the discharge port 26.

### (Heat Exchanger)

The heat exchanger 32 is configured to perform heat exchange between the circulation gas flowing through the suction gas line 28A and the circulation gas flowing through the compressed gas line 28B. By being compressed in the compressor 31, the circulation gas flowing through the compressed gas line 28B has a higher temperature than the circulation gas flowing through the suction gas line 28A. By the heat exchange in the heat exchanger 32, the circulation gas flowing through the compressed gas line 28B is cooled by the circulation gas flowing through the suction gas line 28A, and the circulation gas flowing through the suction gas line 28A is heated by the circulation gas flowing through the compressed gas line 28B.

### (Cooler)

As shown in Figs. 4 and 5, the refrigerator 3 may further include a cooler 34 provided between the compressor 31 and the heat exchanger 32 of the compressed gas line 28B. The cooler 34 is configured to perform heat exchange between the circulation gas flowing through the compressed gas line 28B (circulation line 28) and a liquid coolant (for example, water) having a temperature lower than the circulation gas. The circulation gas flowing through the compressed gas line 28B toward the heat exchanger 32 is cooled by the liquid coolant due to the heat exchange in the cooler 34.

In the embodiments shown in Figs. 4 and 5, the refrigerator 3 further includes a liquid coolant circulation line 35 for circulating the liquid coolant. The liquid coolant is supplied to the cooler 34 via the liquid coolant circulation line 35. Specifically, the liquid coolant circulation line 35 is provided with a radiator 361 that configures a cooling device 36 for cooling the liquid coolant, and a pump 37 for sending the liquid coolant in the liquid coolant circulation line 35. The cooling device 36 includes the radiator 361 and a fan 362 for air-cooling the radiator 361.

The liquid coolant whose temperature has risen by exchanging heat with the circulation gas flowing through the compressed gas line 28B in the cooler 34 is sent to the liquid coolant circulation line 35 by the pump 37 and is cooled by the cooling device 36 including the radiator 361. The liquid coolant cooled by the cooling device 36 is supplied to the cooler 34 via the liquid coolant circulation line 35. The refrigerant circulating through the liquid coolant circulation line 35 is not limited to a liquid and may be a gas. The refrigerant circulating through the liquid coolant circulation line 35 may be an antifreeze such as glycol water. It is preferable that the refrigerant circulating through the liquid coolant circulation line 35 has a lower freezing point than water.

### (Expander, Electric Motor)

In some embodiments, the expander 33 may be connected to the compressor 31 via a rotary shaft 38. In the embodiments shown in Figs. 4 and 5, the refrigerator 3 further includes an electric motor 39 configured to generate a driving force for driving the compressor 31. The compressor 31 includes an electric compressor configured to be driven by an electric motor 39 to compress the circulation gas. The compressor 31 and the expander 33 are disposed coaxially with each other via a rotary shaft 38 that is an output shaft of an electric motor 39 for driving the compressor 31, and are respectively connected to the rotary shaft 38. The electric motor 39 is supplied with a current from a power supply (generator or the like) (not shown), and is driven by the current supplied from the power supply to drive the rotary shaft 38, the compressor 31, and the expander 33. In the expander 33, a part of the expansion energy generated when the gas is expanded is recovered, and the driving of the compressor 31 is assisted by the recovered expansion energy.

As shown in Fig. 5, at least a part of each of the suction gas line 28A, the compressed gas line 28B, and the expansion gas line 28C is formed by a pipe disposed inside the refrigerator casing 4 (refrigerator accommodation space 40). Each pipe forming the circulation line 28 may be formed of a plurality of pipe portions connected to each other via a flange or the like.

In the embodiment shown in Fig. 5, the pipe forming the suction gas line 28A includes a pipe 281 provided between an inlet-side communication hole 48 formed in the refrigerator casing 4 and an inlet of the heat exchanger 32, and a pipe 282 provided between an outlet of the heat exchanger 32 and the compressor 31. The pipe forming the compressed gas line 28B includes a pipe 283 provided between an outlet of the compressor 31 and an inlet of the cooler 34, a pipe 284 provided between an outlet of the cooler 34 and an inlet of the heat exchanger 32, and a pipe 285 provided between the outlet of the heat exchanger 32 and an inlet of the expander 33. The pipe forming the expansion gas line 28C includes a pipe 286 provided between an outlet of the expander 33 and an outlet-side communication hole 47 formed in the refrigerator casing 4.

Considering the flow of a gas (cold air) such as air in the refrigeration space 20, it is preferable that the discharge port 26 is formed below the suction port 27. It is preferable that the outlet-side communication hole 47 is formed below the inlet-side communication hole 48.

### (Heat Insulating Material)

As shown in Figs. 2 and 3, the refrigerated container 1 is further provided with a heat insulating material 5 laminated on the outer wall surface 41 of the refrigerator casing 4. The heat insulating material 5 has a surface (end surface) 51 on a refrigeration space 20 side of the container body 2 in the longitudinal direction extending along a direction orthogonal to the longitudinal direction of the container body 2, and partitions the refrigeration space 20 and the refrigerator casing 4 (refrigerator accommodation space 40). In the embodiments shown in Figs. 2 and 3, a surface 91 on the refrigeration space 20 side of a metal plate 9 laminated on the surface 51 of the heat insulating material 5 faces the refrigeration space 20. However, the surface 51 of the heat insulating material 5 may face the refrigeration space 20. The refrigeration space 20 is defined by the surface 51 of the heat insulating material 5, an inner surface of each of the plurality of walls 21 to 24 constituting the container body 2 described above, and an inner surface of the door 25. The discharge port 26 and the suction port 27 described above are formed on the surface 51 of the heat insulating material 5.

In some embodiments, as shown in Figs. 2 and 3, an outlet flow path 6 for connecting the refrigerator accommodation space 40 and the refrigeration space 20 to each other and guiding a circulation gas cooled in the refrigerator 3 to the refrigeration space 20 via the discharge port 26 is formed inside the heat insulating material 5 described above. The outlet flow path 6 constitutes a part of the expansion gas line 28C described above. The discharge port 26 is formed at one end of the outlet flow path 6, and an outlet opening 61 connected to the refrigerator accommodation space 40 is formed at the other end of the outlet flow path 6. The outlet opening 61 is connected to an outlet of the pipe 286 via the outlet-side communication hole 47 described above. The expansion gas line 28C described above is formed inside the refrigerator casing 4 and the heat insulating material 5.

According to the above-described configuration, the heat insulating material 5 is disposed between the refrigerator casing 4 and the refrigeration space 20, and the refrigerator 3 that can be a heat source is disposed inside the refrigerator casing 4. In this manner, the heat insulation performance of the refrigeration space 20 can be relatively improved. In a case where the heat insulation performance of the refrigeration space 20 is high, since the thickness of the heat insulating material attached to (laminated on) the inner surface of the container body 2 (the inner surface of each of the plurality of walls 21 to 24) can be reduced, the refrigeration space 20, which is an internal space of the refrigerated container 1, can be enlarged.

In addition, according to the above-described configuration, the outlet flow path 6 is formed inside the heat insulating material 5. In this manner, the heat dissipation of the circulation gas (cold air) flowing through the outlet flow path 6 can be suppressed without separately performing heat insulation construction on the outlet flow path 6. By suppressing the heat dissipation of the circulation gas flowing through the outlet flow path 6, it is possible to suppress the occurrence of unevenness in the temperature distribution of the circulation gas guided to the refrigeration space 20 via the discharge port 26. In addition, by suppressing the heat dissipation of the circulation gas in the outlet flow path 6, it is possible to effectively guide the circulation gas cooled in the refrigerator 3 to the refrigeration space 20.

In some embodiments, as shown in Figs. 2 and 3, an inlet flow path 7 for connecting the refrigerator accommodation space 40 and the refrigeration space 20 to each other and guiding a circulation gas suctioned from the refrigeration space 20 to the refrigerator 3 via the suction port 27 is formed inside the heat insulating material 5 described above. The inlet flow path 7 constitutes a part of the suction gas line 28A described above. The suction port 27 is formed at one end of the inlet flow path 7, and an inlet opening 71 connected to the refrigerator accommodation space 40 is formed at the other end of the inlet flow path 7. The suction gas line 28A described above is formed inside the refrigerator casing 4 and the heat insulating material 5. In addition, the compressed gas line 28B described above is formed inside the refrigerator casing 4.

According to the above-described configuration, the inlet flow path 7 is formed inside the heat insulating material 5. In this manner, the heat dissipation of the circulation gas flowing through the inlet flow path 7 can be suppressed. By suppressing the heat dissipation of the circulation gas flowing through the inlet flow path 7, the thermal energy of the circulation gas guided to the refrigerator 3 via the inlet flow path 7 can be effectively utilized as a heating source of the refrigerator 3 (heat exchanger 32).

### (Shape of Outlet Flow Path)

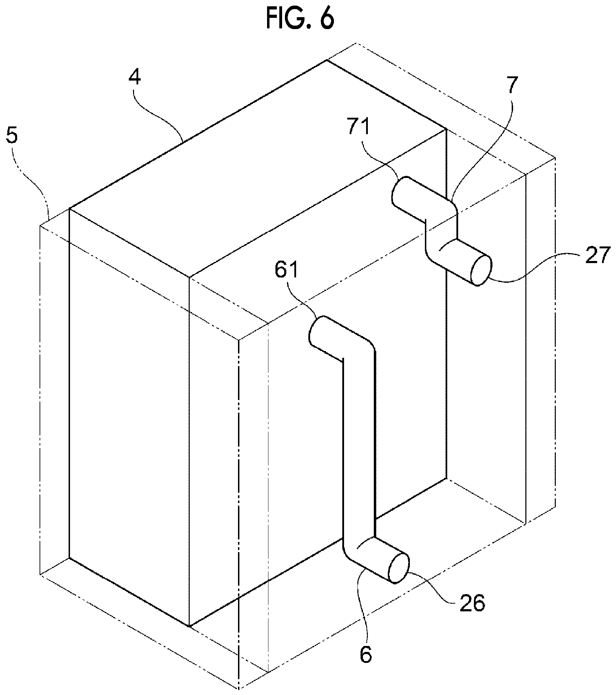

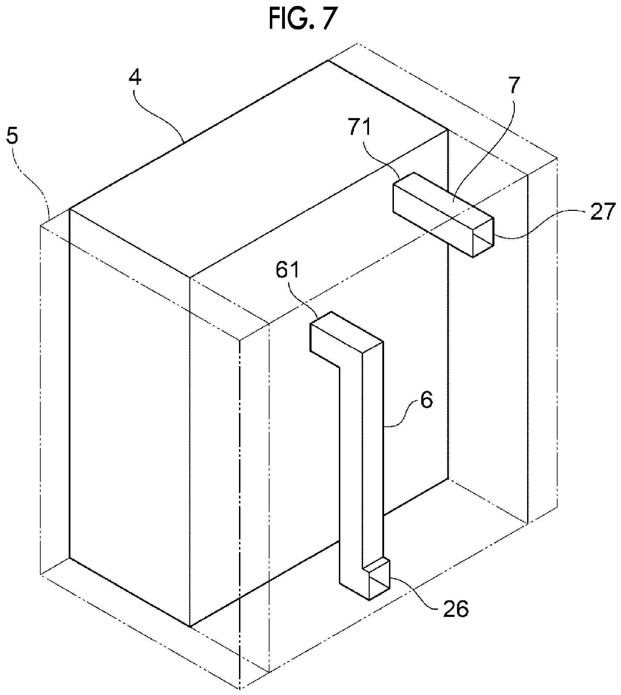

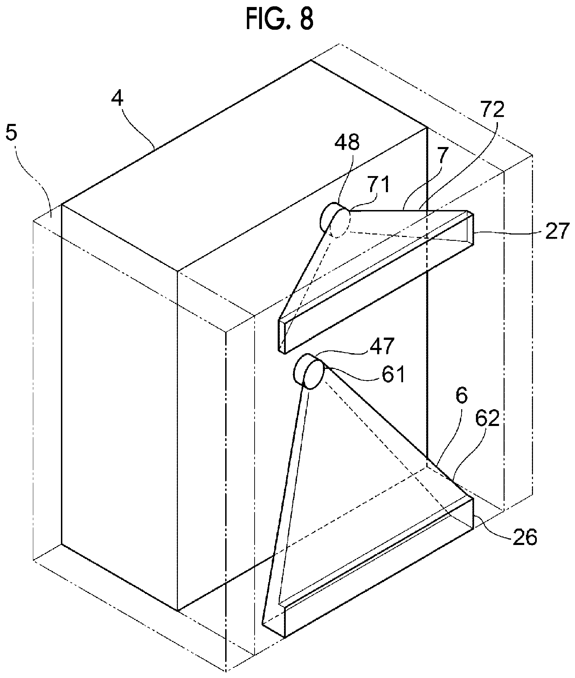

Figs. 6 to 8 are schematic perspective views of the refrigerator casing 4 and the heat insulating material 5 of the refrigerated container 1 according to the embodiment of the present disclosure. In some embodiments, as shown in Figs. 7 and 8, the cross-sectional shape of the outlet flow path 6 described above is formed in a quadrangular shape (rectangular shape or trapezoidal shape). The cross section of the outlet flow path 6 means a cross section orthogonal to a flow direction of the circulation gas from the outlet opening 61 of the outlet flow path 6 toward the discharge port 26. In this case, the outlet flow path 6 has good workability, and the cross-sectional area (flow path area) can be larger than in a case where the cross-sectional shape of the outlet flow path 6 is a circular shape or an elliptical shape. In some other embodiments, the cross-sectional shape of the outlet flow path 6 may be formed in a circular shape or an elliptical shape as shown in Fig. 6. In addition, the opening shape of the outlet opening 61 may be different from the opening shape of the outlet-side communication hole 47.

In some embodiments, as shown in Fig. 8, the outlet flow path 6 described above includes at least a part of a flow path area expansion portion 62 in which a flow path area increases toward the refrigeration space 20 side. It is preferable that the flow path area expansion portion 62 includes the discharge port 26 formed at the one end of the outlet flow path 6. In a case where the discharge port 26 has a longitudinal direction along the width direction of the container body 2, it is preferable that the flow path area of the flow path area expansion portion 62 increases along the width direction of the container body 2 toward the refrigeration space 20 side. The flow path area expansion portion 62 may have a cross-sectional area (flow path area) that increases toward the refrigeration space 20 side in the longitudinal direction of the container body 2, or may have a cross-sectional area (flow path area) that increases toward the downstream side in the flow direction of the circulation gas from the outlet opening 61 of the outlet flow path 6 toward the discharge port 26 (refrigeration space 20 side). According to the above-described configuration, by providing the flow path area expansion portion 62 in the outlet flow path 6, the opening area required at the discharge port 26 can be secured while suppressing the pressure loss in the outlet flow path 6.

In some embodiments, as shown in Fig. 8, the flow path area expansion portion 62 of the outlet flow path 6 described above is provided from the outlet opening 61, which is connected to the refrigerator accommodation space 40 of the outlet flow path 6, to the discharge port 26. According to the above-described configuration, by providing the flow path area expansion portion 62 from the outlet opening 61 of the outlet flow path 6 to the discharge port 26, the thickness of the heat insulating material 5 required to secure the opening area required at the discharge port 26 is reduced. By minimizing the thickness of the heat insulating material 5, the refrigeration space 20 can be enlarged. In addition, according to the above-described configuration, since unnecessary bends or the like are not formed in the outlet flow path 6, it is possible to reduce the pressure loss in the outlet flow path 6.

### (Shape of Inlet Flow Path)

In some embodiments, as shown in Figs. 7 and 8, the cross-sectional shape of the inlet flow path 7 described above is formed in a quadrangular shape (rectangular shape or trapezoidal shape). The cross section of the inlet flow path 7 means a cross section orthogonal to a flow direction of the circulation gas from the suction port 27 of the inlet flow path 7 toward the inlet opening 71. In this case, the inlet flow path 7 has good workability, and the cross-sectional area (flow path area) can be larger than in a case where the cross-sectional shape of the inlet flow path 7 is a circular shape or an elliptical shape. In some other embodiments, the cross-sectional shape of the inlet flow path 7 may be formed in a circular shape or an elliptical shape as shown in Fig. 6. In addition, the opening shape of the inlet opening 71 may be different from the opening shape of the inlet-side communication hole 48.

In some embodiments, as shown in Fig. 8, the inlet flow path 7 described above includes at least a part of a flow path area expansion portion 72 in which a flow path area increases toward the refrigeration space 20 side. It is preferable that the flow path area expansion portion 72 includes the suction port 27 formed at the one end of the inlet flow path 7. In a case where the suction port 27 has a longitudinal direction along the width direction of the container body 2, it is preferable that the flow path area of the flow path area expansion portion 72 increases along the width direction of the container body 2 toward the refrigeration space 20 side. The flow path area expansion portion 72 may have a cross-sectional area (flow path area) that increases toward the refrigeration space 20 side in the longitudinal direction of the container body 2, or may have a cross-sectional area (flow path area) that increases toward the upstream side in the flow direction of the circulation gas from the suction port 27 (refrigeration space 20 side) of the inlet flow path 7 toward the inlet opening 71. According to the above-described configuration, by providing the flow path area expansion portion 72 in the inlet flow path 7, the opening area required at the suction port 27 can be secured while suppressing the pressure loss in the inlet flow path 7.

In some embodiments, as shown in Fig. 8, the flow path area expansion portion 72 of the inlet flow path 7 described above is provided from the inlet opening 71, which is connected to the refrigerator accommodation space 40 of the inlet flow path 7, to the suction port 27. According to the above-described configuration, by providing the flow path area expansion portion 72 from the inlet opening 71 of the inlet flow path 7 to the suction port 27, the thickness of the heat insulating material 5 required to secure the opening area required at the suction port 27 is reduced. By minimizing the thickness of the heat insulating material 5, the refrigeration space 20 can be enlarged. In addition, according to the above-described configuration, since unnecessary bends or the like are not formed in the inlet flow path 7, it is possible to reduce the pressure loss in the inlet flow path 7.

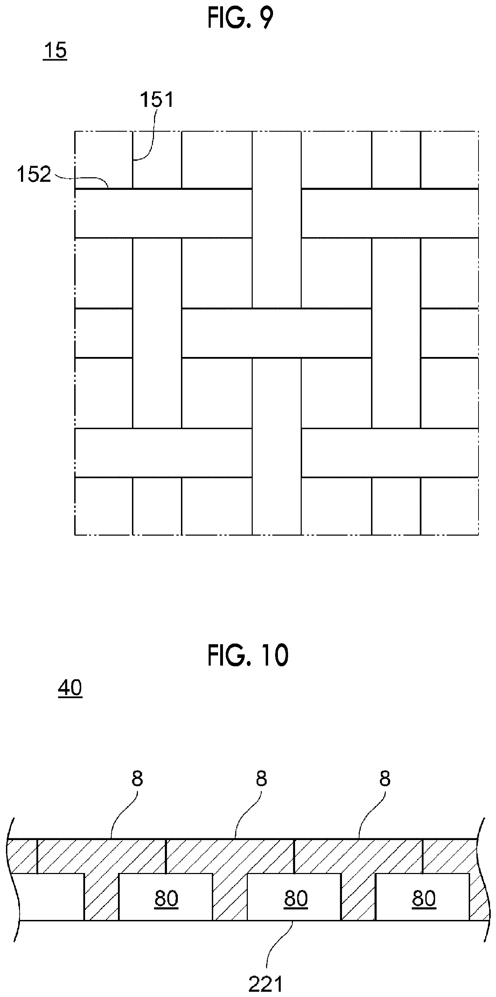

In some embodiments, as shown in Figs. 2 and 3, a metal filter 15 for removing the foreign matter is provided in the suction port 27 described above. Fig. 9 is a schematic view of the metal filter 15 according to the embodiment of the present disclosure. The metal filter 15 has a plurality of holes or meshes, and has a plurality of openings formed by the holes, the meshes, or the like. It is preferable that the metal filter 15 has a filtration particle size of 5 mm or less. In the embodiment shown in Fig. 9, the metal filter 15 has a plurality of openings formed by weaving a plurality of metal fibers 152 extending along the second direction orthogonal to the first direction into a plurality of metal fibers 151 extending along the first direction. The metal filter 15 may be attached to the surface 91 of the metal plate 9 on the refrigeration space 20 side or may be attached to the surface 51 of the heat insulating material 5 on the refrigeration space 20 side. The metal filter 15 can suppress foreign matter or moisture in the air mixing into the inlet flow path 7.

### (Specific Examples of Refrigerator Casing and Heat Insulating Material)

In some embodiments, as shown in Figs. 1 to 3, the refrigerator casing 4 described above includes a back plate portion 42, a ceiling plate portion 43, and a bottom plate portion 44. Each of the back plate portion 42, the ceiling plate portion 43, and the bottom plate portion 44 is formed in a flat plate shape. The back plate portion 42 extends along a direction orthogonal to the longitudinal direction of the container body 2 on the refrigeration space 20 side with respect to the refrigerator 3 in the longitudinal direction of the container body 2.

The ceiling plate portion 43 extends along the direction orthogonal to the height direction of the container body 2 from an upper end portion of the back plate portion 42 and covers an upper side of the refrigerator 3. An outer wall surface of the ceiling plate portion 43 faces an inner surface of the ceiling wall 21 with a gap therebetween. The bottom plate portion 44 extends along the direction orthogonal to the height direction of the container body 2 from a lower end portion of the back plate portion 42 and covers a lower side of the refrigerator 3. An outer wall surface of the bottom plate portion 44 faces an inner surface (floor surface 221) of the bottom wall 22 with a gap therebetween.

As shown in Fig. 1, the refrigerator casing 4 described above may further include a pair of side plate portions 45 and 46 that extend along a direction orthogonal to the width direction of the container body 2 and cover the sides of the refrigerator 3. The side plate portions 45 are connected to each of end portions of the back plate portion 42, the ceiling plate portion 43, and the bottom plate portion 44 on one side in the width direction of the container body 2. An outer wall surface of the side plate portion 45 faces an inner surface of the long side wall 23 with a gap therebetween. The side plate portions 46 are connected to each of end portions of the back plate portion 42, the ceiling plate portion 43, and the bottom plate portion 44 on the other side in the width direction of the container body 2. An outer wall surface of the side plate portion 46 faces an inner surface of the long side wall 24 with a gap therebetween.

In some embodiments, as shown in Figs. 1 to 3, the heat insulating material 5 described above includes a back surface side heat insulating material 5A, an upper surface side heat insulating material 5B, and a lower surface side heat insulating material 5C. The back surface side heat insulating material 5A is laminated on a back surface 421 which is a surface of the back plate portion 42 on the refrigeration space 20 side. The upper surface side heat insulating material 5B is laminated on the outer wall surface (upper surface) of the ceiling plate portion 43. It is preferable that the upper surface side heat insulating material 5B abuts against each of the outer wall surface of the ceiling plate portion 43 and the inner surface of the ceiling wall 21. The lower surface side heat insulating material 5C is laminated on the outer wall surface (lower surface) of the bottom plate portion 44. It is preferable that the lower surface side heat insulating material 5C abuts against each of the outer wall surface of the bottom plate portion 44 and the inner surface of the bottom wall 22.

In the illustrated embodiment, the back surface side heat insulating material 5A includes an upper portion located on the refrigeration space 20 side with respect to the back surface 421 of the back plate portion 42 and above the outer wall surface of the ceiling plate portion 43, and a lower portion located on the refrigeration space 20 side with respect to the back surface 421 of the back plate portion 42 and below the outer wall surface of the bottom plate portion 44. In some other embodiments, the upper surface side heat insulating material 5B may include the upper portion, and the lower surface side heat insulating material 5C may include the lower portion. It is preferable that the upper portion abuts against the inner surface of the ceiling wall 21. It is preferable that the lower portion abuts against the inner surface of the bottom wall 22.

As shown in Fig. 1, the heat insulating material 5 described above may further include a side surface side heat insulating material 5D that is laminated on the outer wall surface of the side plate portion 45 described above and a side surface side heat insulating material 5E that is laminated on the outer wall surface of the side plate portion 46 described above. It is preferable that the side surface side heat insulating materials 5D and 5E abut against each of the outer wall surfaces of the side plate portions 45 and 46 and the inner surfaces of the long side walls 23 and 24 facing the outer wall surfaces with a gap therebetween. Each of the back surface side heat insulating material 5A, the upper surface side heat insulating material 5B, the lower surface side heat insulating material 5C, and the pair of side surface side heat insulating materials 5D and 5E may be configured by a plurality of heat insulating materials.

According to the above-described configuration, since the heat insulating material 5 includes the back surface side heat insulating material 5A, the upper surface side heat insulating material 5B, and the lower surface side heat insulating material 5C, the heat input to the refrigerator accommodation space 40 or the heat dissipation from the refrigerator accommodation space 40 can be suppressed. The heat insulating material 5 including the back surface side heat insulating material 5A, the upper surface side heat insulating material 5B, and the lower surface side heat insulating material 5C can make the shape of the outlet flow path 6 formed inside the heat insulating material 5 appropriate according to the position of the outlet-side communication hole 47 (47A, 47B) or the discharge port 26. In addition, the heat insulating material 5 including the back surface side heat insulating material 5A, the upper surface side heat insulating material 5B, and the lower surface side heat insulating material 5C can make the shape of the inlet flow path 7 formed inside the heat insulating material 5 appropriate according to the position of the inlet-side communication hole 48 (48A, 48B) or the suction port 27. The heat insulating material 5 including the back surface side heat insulating material 5A, the upper surface side heat insulating material 5B, and the lower surface side heat insulating material 5C can be reused in the container body 2 having a different standard size without changing the refrigerator 3 or the refrigerator casing 4 by changing the thickness of each of the parts 5A, 5B, 5C, 5D, and 5E of the heat insulating material.

In some embodiments, in the heat insulating material 5 described above, each of the back surface side heat insulating material 5A, the upper surface side heat insulating material 5B, and the lower surface side heat insulating material 5C is configured separately.

According to the above-described configuration, by configuring each of the back surface side heat insulating material 5A, the upper surface side heat insulating material 5B, and the lower surface side heat insulating material 5C separately, each of the parts 5A, 5B, and 5C of the heat insulating material can be brought into close contact with the refrigerator casing 4. Therefore, the leakage of the fluid through the gap between the heat insulating material 5 and the refrigerator casing 4 can be effectively suppressed. In addition, since each of the parts 5B and 5C of the heat insulating material can be brought into close contact with the inner surface of the container body 2, the leakage of the fluid through the gap between the heat insulating material 5 and the container body 2 can be effectively suppressed. In addition, by configuring each of the back surface side heat insulating material 5A, the upper surface side heat insulating material 5B, and the lower surface side heat insulating material 5C separately, each of the severely damaged or deteriorated parts 5A, 5B, and 5C of the heat insulating material can be replaced alone, and thus the maintainability of the heat insulating material can be improved. In the heat insulating material 5, each of the pair of side surface side heat insulating materials 5D and 5E may also be configured separately by each of the back surface side heat insulating material 5A, the upper surface side heat insulating material 5B, and the lower surface side heat insulating material 5C.

In some embodiments, as shown in Fig. 2, the outlet flow path 6 described above is connected to the refrigerator accommodation space 40 via the outlet-side communication hole 47A (47) formed in the back plate portion 42 described above. In the embodiment shown in Fig. 2, the discharge port 26 is formed below the outer wall surface of the bottom plate portion 44, and the outlet flow path 6 is formed in the back surface side heat insulating material 5A. A part of the outlet flow path 6 that includes the discharge port 26 is formed in the lower portion of the back surface side heat insulating material 5A.

According to the above-described configuration, the outlet flow path 6 is connected to the refrigerator accommodation space 40 via the outlet-side communication hole 47A formed in the back plate portion 42. In this case, since the length of the pipe in the refrigerator accommodation space 40 for guiding the circulation gas from the refrigerator 3 to the outlet flow path 6 can be made short, the heat dissipation from the pipe can be suppressed. In addition, in a case where the length of the pipe is short, the heat insulation construction for the pipe is facilitated by that amount. In addition, according to the above-described configuration, even in a case where the thickness of the heat insulating material covering the lower side of the refrigerator casing 4 is relatively small, the outlet flow path 6 can be formed inside the heat insulating material.

In some embodiments, as shown in Fig. 2, the inlet flow path 7 described above is connected to the refrigerator accommodation space 40 via an inlet-side communication hole 48A (48) formed above the outlet-side communication hole 47A (47) of the back plate portion 42. In the embodiment shown in Fig. 2, the suction port 27 is formed at a position overlapping the back plate portion 42 when viewed from the one side in the longitudinal direction of the container body 2, and the inlet flow path 7 is formed in the back surface side heat insulating material 5A. The inlet flow path 7 is not formed in the upper portion or the lower portion of the back surface side heat insulating material 5A.

According to the above-described configuration, the inlet flow path 7 is connected to the refrigerator accommodation space 40 via the inlet-side communication hole 48A formed above the outlet-side communication hole 47A of the back plate portion 42. In this case, since the length of the pipe in the refrigerator accommodation space 40 for guiding the circulation gas from the inlet flow path 7 to the refrigerator 3 can be made short, the heat dissipation from the pipe can be suppressed. In addition, according to the above-described configuration, even in a case where the thickness of the heat insulating material covering the upper side of the refrigerator casing 4 is relatively small, the inlet flow path 7 can be formed inside the heat insulating material.

In some embodiments, as shown in Fig. 3, the outlet flow path 6 described above is connected to the refrigerator accommodation space 40 via an outlet-side communication hole 47B (47) formed in the bottom plate portion 44. In the embodiment shown in Fig. 3, the discharge port 26 is formed below the outer wall surface of the bottom plate portion 44, and the outlet flow path 6 is formed in the lower portions of the lower surface side heat insulating material 5C and the back surface side heat insulating material 5A.

According to the above-described configuration, the outlet flow path 6 is connected to the refrigerator accommodation space 40 via the outlet-side communication hole 47B formed in the bottom plate portion 44. In this case, it becomes easy to install the discharge port 26 on the lower side (floor surface side) in the height direction of the container body 2. By making the difference between the discharge port 26 and the suction port 27 in the height direction of the container body 2 large, it is possible to effectively suppress the occurrence of unevenness in the temperature distribution in the height direction of the container body 2 in the refrigeration space 20.

In some embodiments, as shown in Fig. 3, the inlet flow path 7 described above is connected to the refrigerator accommodation space 40 via an inlet-side communication hole 48B (48) formed in the ceiling plate portion 43. In the embodiment shown in Fig. 3, the suction port 27 is formed above the outer wall surface of the ceiling plate portion 43, and the inlet flow path 7 is formed in the upper portions of the upper surface side heat insulating material 5B and the back surface side heat insulating material 5A.

According to the above-described configuration, the inlet flow path 7 is connected to the refrigerator accommodation space 40 via the inlet-side communication hole 48B formed in the ceiling plate portion 43. In this case, it becomes easy to install the suction port 27 on the upper side (ceiling surface side) in the height direction of the container body 2.

Each of the outlet flow path 6 and the inlet flow path 7 does not overlap with the back plate portion 42 when viewed from one side in the longitudinal direction of the container body 2. In this manner, the thickness of the back surface side heat insulating material 5A can be reduced.

### (Laying Member)

Fig. 10 is a schematic cross-sectional view of a laying member 8 laid in the refrigerated container 1 according to the embodiment of the present disclosure taken along the direction orthogonal to the longitudinal direction of the container body 2. In some embodiments, as shown in Figs. 2 and 3, the refrigerated container 1 described above is further provided with at least one laying member 8 laid on a floor surface of the refrigeration space 20 of the container body 2 (the floor surface 221 of the bottom wall 22). In the illustrated embodiment, the at least one laying member 8 includes a plurality of rail members 8 that are disposed side by side along the width direction of the container body 2, extend along the longitudinal direction of the container body 2, and have a cross-sectional shape formed in a T-shape. A gas flow path 80 through which a gas flows is formed below an upper surface of the at least one laying member 8 (plurality of rail members 8) described above. In the illustrated embodiment, one gas flow path 80 having a longitudinal direction along the longitudinal direction of the container body 2 is formed by the two adjacent rail members 8 and 8 and the floor surface 221 of the bottom wall 22. The discharge port 26 described above is configured to communicate with the gas flow path 80. Specifically, at least a part of the discharge port 26 is formed at a height position to overlap the gas flow path 80 when viewed from the one side in the longitudinal direction of the container body 2.

According to the above-described configuration, the circulation gas (cold air) guided to the gas flow path 80 via the discharge port 26 flows above the upper surface of the laying member 8 after flowing through the gas flow path 80. In this case, since the circulation gas (cold air) guided to the refrigeration space 20 via the discharge port 26 can be guided to a wide range of the refrigeration space 20, even in a case where a load to be cooled is placed on the upper surface of the laying member 8, the entire refrigeration space 20 can be effectively cooled.

### (Shapes of Discharge Port and Suction Port)

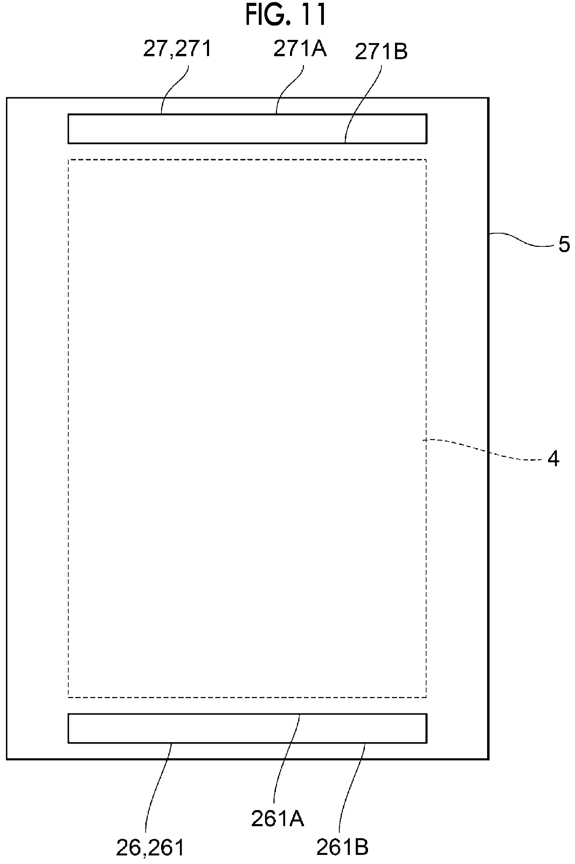

Figs. 11 to 13 are description views for describing the discharge port 26 and the suction port 27 of the refrigerated container 1 according to the embodiment of the present disclosure. Figs. 11 to 13 show the heat insulating material 5 as viewed from the refrigeration space 20 in a longitudinal direction of the refrigerated container 1.

In some embodiments, as shown in Figs. 11 to 13, the discharge port 26 described above includes a first opening portion 261 having a longitudinal direction along the width direction of the container body 2, and the suction port 27 described above includes a second opening portion 271 having a longitudinal direction along the width direction of the container body 2. The discharge port 26 extends along the width direction of the container body 2, and a part of the shape of the discharge port 26 is formed by a pair of edge portions 261A and 261B that are spaced apart and face each other in the height direction of the container body 2. The suction port 27 extends along the width direction of the container body 2, and a part of the shape of the suction port 27 is formed by a pair of edge portions 271A and 271B that are spaced apart and face each other in the height direction of the container body 2. In the embodiment shown in Fig. 11, the discharge port 26 and the suction port 27 are formed in a rectangular shape having a longitudinal direction along the width direction of the container body 2.

According to the above-described configuration, the discharge port 26 including the first opening portion 261 can introduce the circulation gas into a relatively wide range in the width direction of the refrigeration space 20. The suction port 27 including the second opening portion 271 can suction the internal gas from a relatively wide range in the width direction of the refrigeration space 20. In this manner, it is possible to effectively suppress the occurrence of unevenness in the temperature distribution in the width direction of the refrigeration space 20.

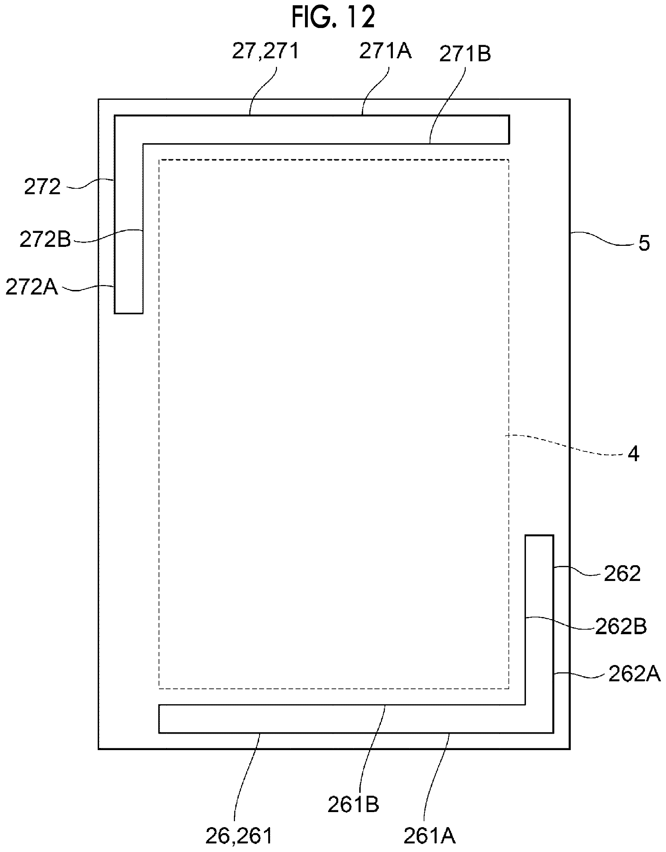

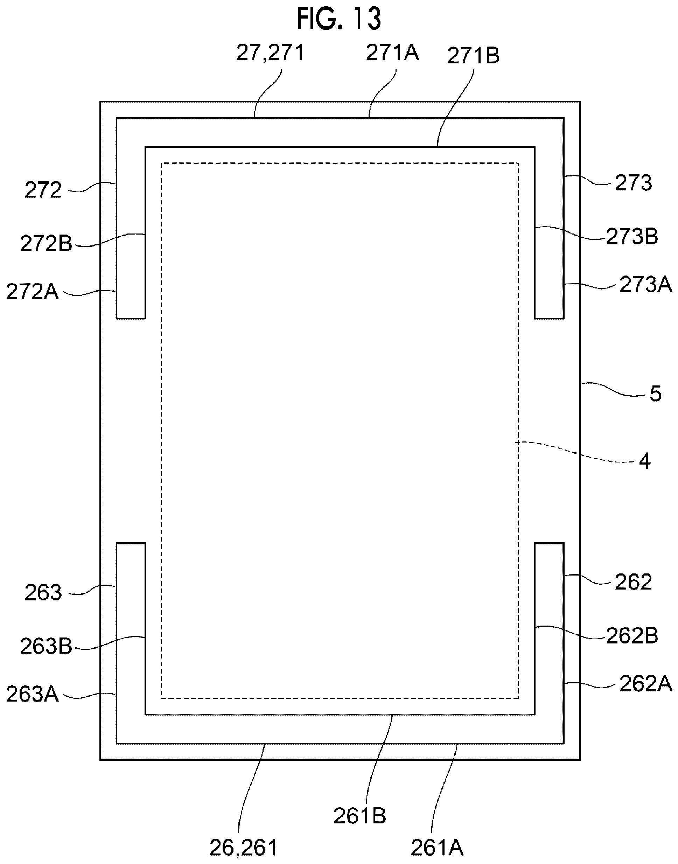

In some embodiments, as shown in Figs. 12 and 13, the discharge port 26 described above further includes a first upper opening portion 262 having a longitudinal direction upward from an end portion on one side in the width direction of the first opening portion 261, and the suction port 27 described above includes a first lower opening portion 272 having a longitudinal direction downward from an end portion on the other side in the width direction of the second opening portion 271. The discharge port 26 extends upward from one ends of the pair of edge portions 261A and 261B along the height direction of the container body 2, and a part of the shape of the discharge port 26 is formed by a pair of edge portions 262A and 262B that are spaced apart and face each other in the width direction of the container body 2. The suction port 27 extends downward from one ends of the pair of edge portions 271A and 271B along the height direction of the container body 2, and a part of the shape of the suction port 27 is formed by a pair of edge portions 272A and 272B that are spaced apart and face each other in the width direction of the container body 2.

According to the above-described configuration, the discharge port 26 including the first upper opening portion 262 can introduce the circulation gas into a relatively wide range in the height direction of the refrigeration space 20. The suction port 27 including the first lower opening portion 272 can suction the internal gas from a relatively wide range in the height direction of the refrigeration space 20. In this manner, it is possible to effectively suppress the occurrence of unevenness in the temperature distribution in the height direction of the refrigeration space 20.

In some embodiments, as shown in Fig. 13, the discharge port 26 described above includes the first opening portion 261 described above, the first upper opening portion 262 described above, and a second upper opening portion 263 having a longitudinal direction upward from an end portion on the other side in the width direction of the first opening portion 261. The suction port 27 described above includes the second opening portion 271 described above, the first lower opening portion 272 described above, and a second lower opening portion 273 having a longitudinal direction downward from an end portion on the one side in the width direction of the second opening portion 271.

The discharge port 26 extends upward from the other ends of the pair of edge portions 261A and 261B along the height direction of the container body 2, and a part of the shape of the discharge port 26 is formed by a pair of edge portions 263A and 263B that are spaced apart and face each other in the width direction of the container body 2. The suction port 27 extends downward from the other ends of the pair of edge portions 271A and 271B along the height direction of the container body 2, and a part of the shape of the suction port 27 is formed by a pair of edge portions 273A and 273B that are spaced apart and face each other in the width direction of the container body 2.

According to the above-described configuration, the discharge port 26 including the second upper opening portion 263 can introduce the circulation gas into a relatively wide range in the height direction of the refrigeration space 20. The suction port 27 including the second lower opening portion 273 can suction the internal gas from a relatively wide range in the height direction of the refrigeration space 20. In this manner, it is possible to effectively suppress the occurrence of unevenness in the temperature distribution in the height direction of the refrigeration space 20.

### (Material of Heat Insulating Material)

In some embodiments, as the material of the heat insulating material 5 described above, a heat insulating material having a thermal conductivity of 0.03 W/(m·K) or less, such as urethane or phenovaboard is used. By using a relatively hard heat insulating material such as urethane or phenovaboard as the material of the heat insulating material 5, compared to a case of using a soft heat insulating material such as glass wool, it is possible to easily form the outlet flow path 6 or the inlet flow path 7 in the heat insulating material 5 and suppress deformation of the heat insulating material 5 during use of the refrigerated container 1.

### (Metal Plate)

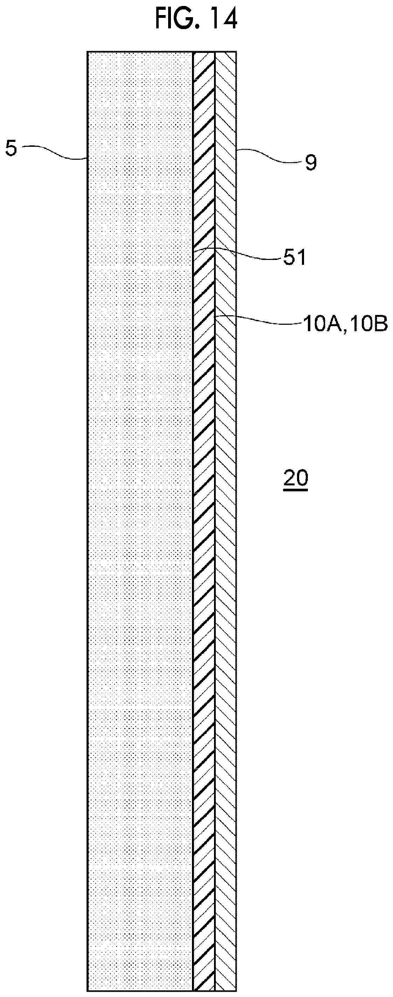

Fig. 14 is a description view for describing the metal plate 9, a water-repellent layer 10A, and a waterproof layer 10B of the refrigerated container 1 according to the embodiment of the present disclosure. In some embodiments, as shown in Figs. 2, 3, and 14, the refrigerated container 1 described above is provided with the metal plate 9 laminated on the surface 51 of the heat insulating material 5 on the refrigeration space 20 side.

According to the above-described configuration, since the metal plate 9 can suppress the heat insulating material 5 from being damaged or deteriorated and the function of the heat insulating material 5 from being deteriorated due to a collision of the load during the unloading work or cleaning of the container, the heat insulation performance of the heat insulating material 5 can be maintained for a relatively long period of time. By adopting a metal having a smaller heat capacity than the heat insulating material 5 for the metal plate 9, it is possible to shorten the period required for cooling the refrigeration space 20.

### (Water-repellent Layer, Waterproof Layer)

In some embodiments, as shown in Fig. 14, the refrigerated container 1 described above is further provided with the water-repellent layer 10A or the waterproof layer 10B formed between the heat insulating material 5 described above and the metal plate 9 described above. Examples of the water-repellent layer 10A include a water-repellent coat formed of a coating agent suitable for low temperature, such as silicon or fluorine. Examples of the waterproof layer 10B include a waterproof sheet.

According to the above-described configuration, since the water-repellent layer 10A or the waterproof layer 10B can suppress the deterioration in the function of the heat insulating material 5 due to the heat insulating material 5 being wet by cleaning of the container or the like, the heat insulation performance of the heat insulating material 5 can be maintained for a relatively long period of time. The surface 51 of the heat insulating material 5 may have a portion where the metal plate 9, the water-repellent layer 10A, and the waterproof layer 10B are not laminated.

### (Outlet Flow Path Side Metal Plate)

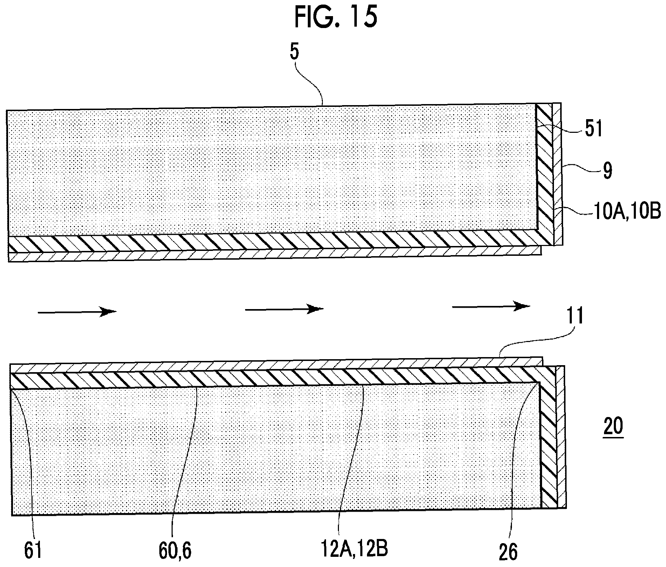

Fig. 15 is a description view for describing an outlet flow path side metal plate 11, an outlet flow path side water-repellent layer 12A, and an outlet flow path side waterproof layer 12B of the refrigerated container 1 according to the embodiment of the present disclosure. In some embodiments, as shown in Fig. 15, the refrigerated container 1 described above is further provided with the outlet flow path side metal plate 11 laminated on an inner surface 60 of the outlet flow path 6.

According to the above-described configuration, the outlet flow path side metal plate 11 laminated on the inner surface 60 of the outlet flow path 6 serves as a reinforcing material, so that the strength of the heat insulating material 5 can be improved. In addition, the outlet flow path side metal plate 11 can suppress damage or deterioration of the inner surface 60 of the outlet flow path 6.

### (Outlet Flow Path Side Water-repellent Layer, Outlet Flow Path Side Waterproof Layer)

In some embodiments, as shown in Fig. 15, the refrigerated container 1 described above is further provided with the outlet flow path side water-repellent layer 12A or the outlet flow path side waterproof layer 12B formed between the inner surface 60 of the outlet flow path 6 and the outlet flow path side metal plate 11 described above. Examples of the outlet flow path side water-repellent layer 12A include a water-repellent coat formed of a coating agent suitable for low temperature, such as silicon or fluorine. Examples of the outlet flow path side waterproof layer 12B include a waterproof sheet.

According to the above-described configuration, the outlet flow path side water-repellent layer 12A or the outlet flow path side waterproof layer 12B can suppress condensed water from entering the heat insulating material 5 via the outlet flow path 6 to deteriorate the heat insulation performance of the heat insulating material 5. The inner surface 60 of the outlet flow path 6 may have a portion where the outlet flow path side metal plate 11, the outlet flow path side water-repellent layer 12A, and the outlet flow path side waterproof layer 12B are not laminated.

### (Inlet Flow Path Side Metal Plate)

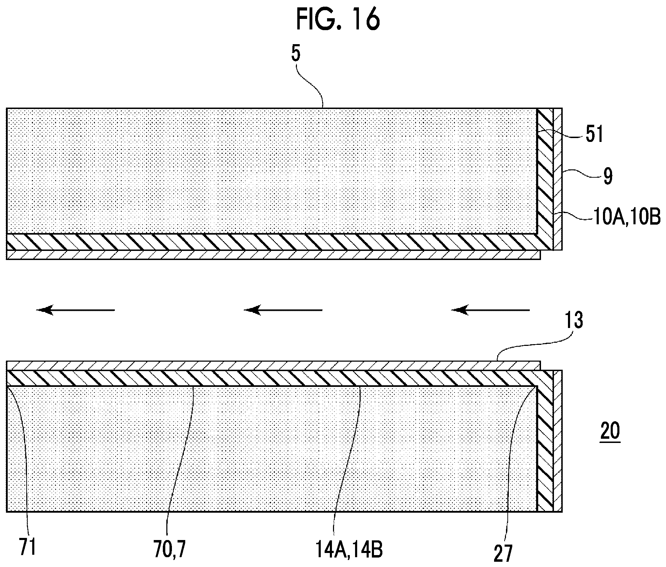

Fig. 16 is a description view for describing an inlet flow path side metal plate 13, an inlet flow path side water-repellent layer 14A, and an inlet flow path side waterproof layer 14B of the refrigerated container 1 according to the embodiment of the present disclosure. In some embodiments, as shown in Fig. 16, the refrigerated container 1 described above is further provided with the inlet flow path side metal plate 13 laminated on an inner surface 70 of the inlet flow path 7.

According to the above-described configuration, the inlet flow path side metal plate 13 laminated on the inner surface 70 of the inlet flow path 7 serves as a reinforcing material, so that the strength of the heat insulating material 5 can be improved. In addition, the inlet flow path side metal plate 13 can suppress damage or deterioration of the inner surface 70 of the inlet flow path 7.

### (Inlet Flow Path Side Water-repellent Layer, Inlet Flow Path Side Waterproof Layer)

In some embodiments, as shown in Fig. 16, the refrigerated container 1 described above is further provided with the inlet flow path side water-repellent layer 14A or the inlet flow path side waterproof layer 14B formed between the inner surface 70 of the inlet flow path 7 and the inlet flow path side metal plate 13 described above. Examples of the inlet flow path side water-repellent layer 14A include a water-repellent coat formed of a coating agent suitable for low temperature, such as silicon or fluorine. Examples of the inlet flow path side waterproof layer 14B include a waterproof sheet.

According to the above-described configuration, the inlet flow path side water-repellent layer 14A or the inlet flow path side waterproof layer 14B can suppress condensed water from entering the heat insulating material 5 via the inlet flow path 7 to deteriorate the heat insulation performance of the heat insulating material 5. The inner surface 70 of the inlet flow path 7 may have a portion where the inlet flow path side metal plate 13, the inlet flow path side water-repellent layer 14A, and the inlet flow path side waterproof layer 14B are not laminated.

### <Refrigerated Container according to Another Embodiment>

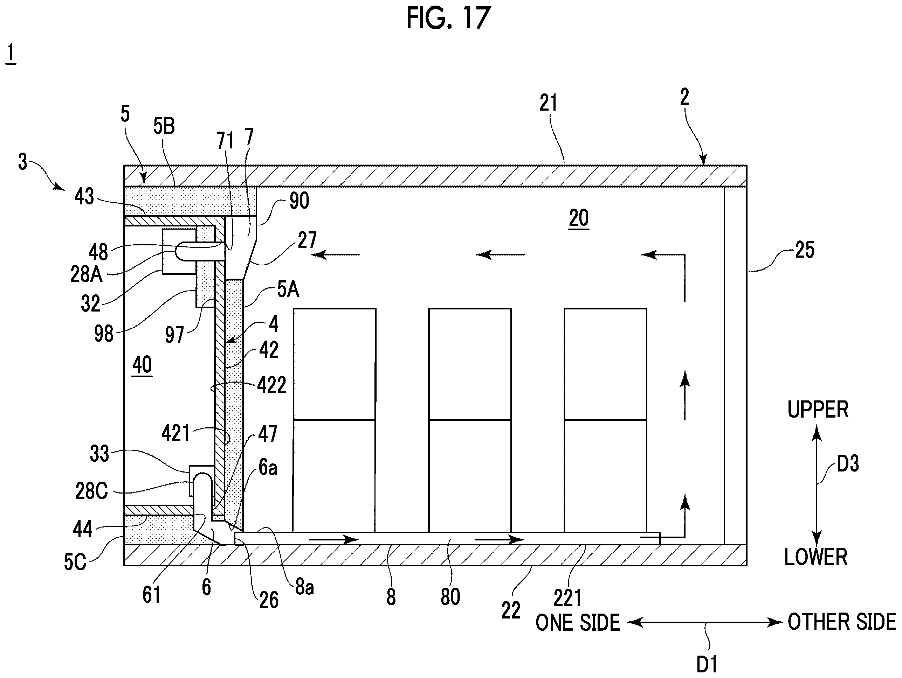

A refrigerated container 1 according to another embodiment will be described. Fig. 17 is a schematic cross-sectional view of a container body 2 of a refrigerated container 1 according to another embodiment taken along a longitudinal direction. In another embodiment, the same components as those in the above-described components are denoted by the same reference signs, and detailed description thereof will be omitted. In the following, a longitudinal direction of the container body 2 will be described as a "longitudinal direction D1", a width direction of the container body 2 will be described as a "width direction D2", and a height direction of the container body 2 will be described as a "height direction D3".

### (Outlet Flow Path)

A configuration of an outlet flow path 6 according to another embodiment will be described. As shown in Fig. 17, in another embodiment, the outlet flow path 6 is formed with the discharge port 26 configured to communicate with the gas flow path 80 at one end. The outlet flow path 6 is formed with the outlet opening 61 configured to communicate with the outlet-side communication hole 47 that is formed in the bottom plate portion 44 at the other end.

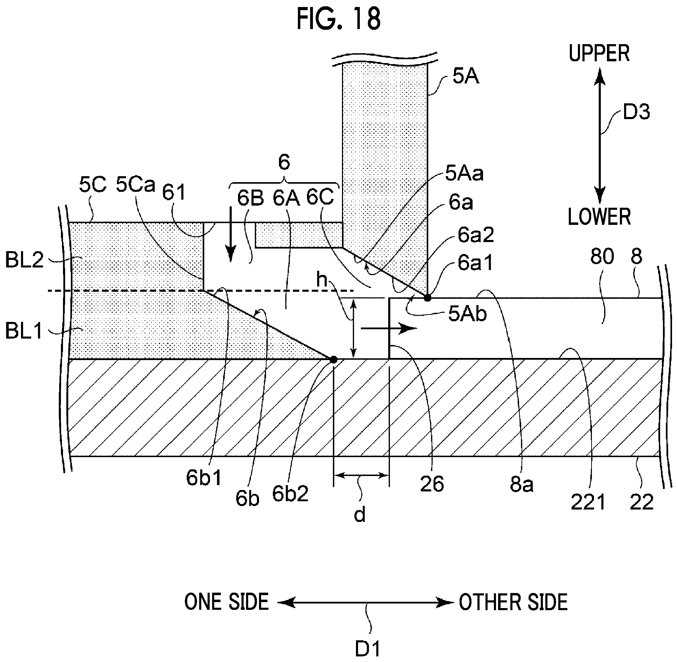

Fig. 18 is a view for describing a peripheral structure of the outlet flow path 6 according to another embodiment. In the embodiment illustrated in Fig. 18, at least a part 6a1 of an upper surface 6a of the outlet flow path 6 abuts against an upper surface 8a of the laying member 8. Specifically, a lower surface 5Aa of the back surface side heat insulating material 5A faces the outlet flow path 6 from above and forms the upper surface 6a of the outlet flow path 6. The lower surface 5Aa of the back surface side heat insulating material 5A is inclined downward toward the other side (refrigeration space 20 side) in the longitudinal direction D1. That is, the upper surface 6a of the outlet flow path 6 includes an upper surface inclined portion 6a2 that is inclined downward toward the refrigeration space 20 side. The lower surface 5Aa of the back surface side heat insulating material 5A has an end portion 5Ab on the other side (refrigeration space 20 side) in the longitudinal direction D1 abutting against the upper surface 8a of the laying member 8. The end portion 5Ab of the lower surface 5Aa of the back surface side heat insulating material 5A is located on the other side in the longitudinal direction D1 with respect to one end (inlet of the gas flow path 80) on one side in the longitudinal direction D1 of the laying member 8.

In the embodiment illustrated in Fig. 18, a lower surface 6b of the outlet flow path 6 includes a lower surface inclined portion 6b1 that is inclined downward toward the refrigeration space 20 side. Specifically, a lower portion of a side surface 5Ca on the other side in the longitudinal direction D1 of the lower surface side heat insulating material 5C faces the outlet flow path 6 from below and forms the lower surface 6b of the outlet flow path 6. Further, the lower portion of the side surface 5Ca of the lower surface side heat insulating material 5C is inclined downward toward the refrigeration space 20 side as the lower surface inclined portion 6b1.

In the embodiment illustrated in Fig. 18, a tip 6b2 of the lower surface inclined portion 6b1 on the other side in the longitudinal direction D1 is separated from the laying member 8. Specifically, in a case where a height of the laying member 8 is set to h, and a distance between the laying member 8 and the tip 6b2 of the lower surface inclined portion 6b1 is set to d, h/2 ≤ d ≤ 2h is satisfied. For this reason, a part of the floor surface 221 of the bottom wall 22 faces the outlet flow path 6 (in other words, is exposed to the outlet flow path 6). The part of the floor surface 221 of the bottom wall 22 forms the lower surface 6b of the outlet flow path 6 together with the lower surface inclined portion 6b1.

In the embodiment illustrated in Fig. 18, the lower surface side heat insulating material 5C includes the first heat insulating block BL1 and the second heat insulating block BL2 disposed above the first heat insulating block BL1 (above the dotted line in Fig. 18). Then, a first outlet flow path portion 6A is formed inside the first heat insulating block BL1. A second outlet flow path portion 6B is formed inside the second heat insulating block BL2. The outlet flow path 6 includes the first outlet flow path portion 6A and the second outlet flow path portion 6B. Therefore, by disposing the first heat insulating block BL1, the refrigerator 3, and the second heat insulating block BL2 in this order, the workability can be improved. In the embodiment illustrated in Fig. 18, the outlet flow path 6 further includes a third outlet flow path portion 6C formed between the lower surface 5Aa of the back surface side heat insulating material 5A and the part of the floor surface 221 of the bottom wall 22, in addition to the first outlet flow path portion 6A and the second outlet flow path portion 6B. The lower surface side heat insulating material 5C may be composed only of the first heat insulating block BL1, and the back surface side heat insulating material 5A may be composed only of the second heat insulating block BL2.

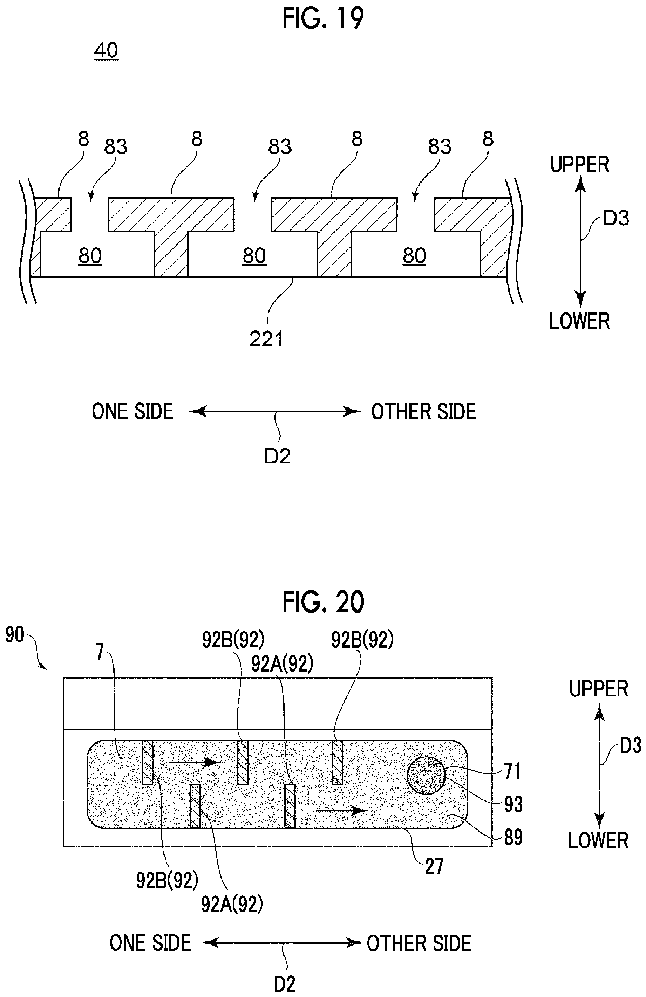

Fig. 19 is a schematic cross-sectional view of the laying member 8 according to another embodiment taken along the width direction D2. In another embodiment, as illustrated in Fig. 19, the laying member 8 is a rail member 8 formed in a T-shape. A plurality of the rail members 8 are laid on the floor surface 221 of the bottom wall 22. As described above, the plurality of rail members 8 extend along the longitudinal direction D1. The plurality of rail members 8 are disposed side by side with a gap 83 therebetween along the width direction D2.

The action and effect of the outlet flow path 6 according to another embodiment will be described. According to another embodiment, as illustrated in Fig. 17, the outlet flow path 6 is formed by the first outlet flow path portion 6A, the second outlet flow path portion 6B, and the third outlet flow path portion 6C, and can be formed without passing through the inside of the back plate portion 42. Therefore, compared to the embodiment illustrated in Fig. 2 and the embodiment illustrated in Fig. 3, the thickness (length in the longitudinal direction D1) of the back plate portion 42 can be reduced, and the refrigeration space 20 can be enlarged.

According to another embodiment, since the end portion 5Ab (at least the part 6a1 of the upper surface 6a of the outlet flow path 6) of the lower surface 5Aa of the back surface side heat insulating material 5A abuts against the upper surface 8a of the rail member 8, it is possible to prevent the circulation gas from being blown out from the outlet flow path 6 to the refrigeration space 20 without passing through the gas flow path 80. Specifically, it is possible to prevent the circulation gas flowing through the third outlet flow path portion 6C from blowing out to the refrigeration space 20.

According to another embodiment, since the part of the floor surface 221 of the bottom wall 22 faces the outlet flow path 6, the frozen matter formed by the freezing of the moisture contained in the circulation air can be deposited on the part of the floor surface 221, and it is possible to prevent the discharge port 26 from being blocked. Further, according to another embodiment, as illustrated in Fig. 19, the plurality of rail members 8 are disposed side by side with the gap 83 therebetween. For this reason, even when the frozen matter is deposited on the part of the floor surface 221 to block the discharge port 26 of the outlet flow path 6, the circulation gas can flow into the gas flow path 80 from the gap 83.

According to another embodiment, since the lower portion of the side surface 5Ca of the lower surface side heat insulating material 5C is inclined downward toward the refrigeration space 20 side, the circulation air flows through the outlet flow path 6 to approach the direction (longitudinal direction D1) in which the gas flow path 80 extends. For this reason, the circulation air can smoothly flow into the gas flow path 80 from the outlet flow path 6.

According to another embodiment, the first outlet flow path portion 6A is formed inside one first heat insulating block BL1, and the second outlet flow path portion 6B is formed inside one second heat insulating block BL2. Therefore, compared to a case where the first outlet flow path portion 6A is formed by combining a plurality of the first heat insulating blocks BL1, the number of the first heat insulating blocks BL1 required to form the first outlet flow path portion 6A can be reduced. In addition, compared to a case where the plurality of first heat insulating blocks BL1 are combined, the manufacturing error of the first outlet flow path portion 6A can be reduced, and the heat insulating properties can be improved. The second heat insulating block BL2 can also exhibit the same action and effect.

### (Inlet Flow Path)

A configuration of an inlet flow path 7 according to another embodiment will be described. As shown in Fig. 17, in another embodiment, the refrigerated container 1 further includes an inlet flow path forming portion 90 provided on the back surface 421 of the back plate portion 42. The inlet flow path forming portion 90 is formed with the inlet flow path 7 for connecting the refrigerator accommodation space 40 and the refrigeration space 20 to each other and guiding the circulation gas suctioned from the refrigeration space 20 to the refrigerator 3 via the suction port 27. The inlet flow path forming portion 90 may be formed of the heat insulating material 5 or may be formed of a material other than the heat insulating material 5. In another embodiment, the inlet flow path forming portion 90 is formed of a material different from the heat insulating material 5, and is disposed above the back surface side heat insulating material 5A. The inlet flow path forming portion 90 is interposed between the upper surface side heat insulating material 5B and the back surface side heat insulating material 5A in the height direction D3.

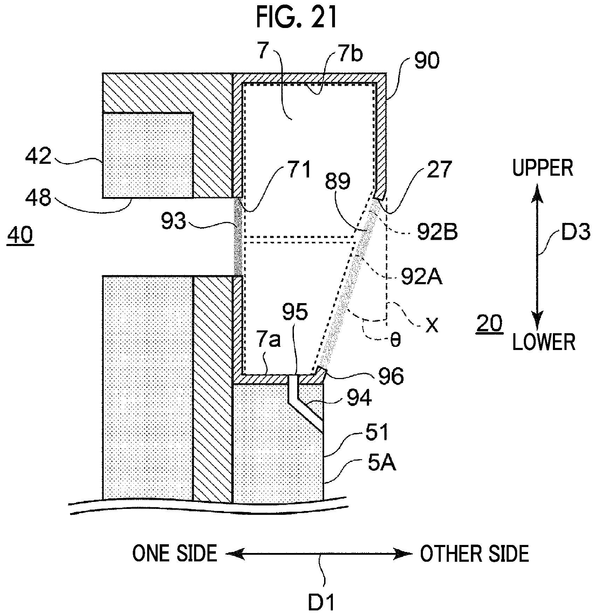

Fig. 20 is a schematic view showing a configuration of the inlet flow path forming portion 90 according to another embodiment, and is a view when the inlet flow path forming portion 90 is viewed from the other side in the longitudinal direction D1. Fig. 21 is a schematic view showing the configuration of the inlet flow path forming portion 90 according to another embodiment, and is a view when the inlet flow path forming portion 90 is viewed from one side in the width direction D2.

In the embodiment illustrated in Fig. 20, the suction port 27 has a longitudinal direction along the width direction D2. The area of the inlet opening 71 is smaller compared to the suction port 27. The inlet opening 71 is located on the other side of the suction port 27 in the width direction D2 when viewed from the longitudinal direction D1, and is disposed to be surrounded by the suction port 27. For this reason, the circulation gas suctioned from the one side in the width direction D2 of the suction port 27 flows to the other side in the width direction D2 as indicated by an arrow in Fig. 20. At this time, the circulation air collides with a collecting plate 92 to be described later.

In the embodiment illustrated in Fig. 20, a suction port filter 89 is provided on the entire surface of the suction port 27. An inlet opening filter 93 having a smaller opening than the suction port filter 89 is provided on the entire surface of the inlet opening 71. In each of Figs. 20 and 21, the size of the opening is illustrated by a shade, and the darker the shade, the smaller the opening.

The opening of the suction port filter 89 is set based on the area of the suction port 27. Specifically, the opening of the suction port filter 89 is set to be small as the flow speed of the circulation gas flowing into the inlet flow path forming portion 90 decreases as the area of the suction port 27 increases.

In the embodiment illustrated in Fig. 20, the refrigerated container 1 further includes at least one collecting plate 92 provided in the inlet flow path 7 to block a part of a cross section of the inlet flow path 7 cut along the height direction D3. The at least one collecting plate 92 includes a first collecting plate 92A (92) that protrudes upward from a lower surface 7a of the inlet flow path 7 and a second collecting plate 92B (92) that protrudes downward from an upper surface 7b of the inlet flow path 7. The first collecting plate 92A and the second collecting plate 92B are disposed side by side along the width direction D2. A plurality of the first collecting plates 92A and a plurality of the second collecting plates 92B are alternately disposed along the width direction D2.

As shown in Fig. 21, the inlet flow path 7 communicates with the refrigerator accommodation space 40 via the inlet-side communication hole 48 formed in the back plate portion 42. The inlet-side communication hole 48 is located above the lower surface 7a of the inlet flow path 7. That is, the inlet opening 71 is located above the lower surface 7a of the inlet flow path 7. Then, an inlet 95 of a drain hole 94 communicating with the refrigeration space 20 is formed in the lower surface 7a of the inlet flow path 7. In the embodiment illustrated in Fig. 21, the drain hole 94 penetrates the inlet flow path forming portion 90 and the back surface side heat insulating material 5A. An outlet of the drain hole 94 is formed on the surface 51 of the back surface side heat insulating material 5A.

In the embodiment illustrated in Fig. 21, the inlet flow path forming portion 90 includes a suction surface 96 on which the suction port 27 is formed. The suction surface 96 is inclined to approach the refrigeration space 20 as going upward. Specifically, in a case where a smaller angle of the angles formed by the virtual line X extending in the up-down direction and the suction surface 96 is set to θ, 0 degrees ≤ θ ≤ 45 degrees is satisfied.

The action and effect of the inlet flow path 7 according to another embodiment will be described. According to another embodiment, since the inlet 95 of the drain hole 94 is formed in the lower surface 7a of the inlet flow path 7, even when the droplets are generated in the inlet flow path 7 (for example, even when the ice formed during the cooling operation becomes droplets), the droplets can be discharged from the inlet flow path 7 to the refrigeration space 20.

According to another embodiment, since the collecting plate 92 is provided in the inlet flow path 7, the foreign matter flowing through the inlet flow path 7 together with the circulation gas collides with the collecting plate 92, so that it is possible to suppress the foreign matter from entering the refrigerator 3. Further, according to another embodiment, since the plurality of first collecting plates 92A and the plurality of second collecting plates 92B are alternately disposed along the width direction D2 in the inlet flow path 7, the foreign matter collides with the first collecting plate 92A or the second collecting plate 92B, so that it is possible to further suppress the foreign matter from entering the refrigerator 3.

According to another embodiment, since the suction port filter 89 is provided in the suction port 27, and the inlet opening filter 93 is provided in the inlet opening 71, the pressure loss of the circulation gas guiding to the refrigerator 3 can be reduced while suppressing the foreign matter from entering by removing relatively large foreign matter with the suction port filter 89 and removing relatively small foreign matter with the inlet opening filter 93. According to another embodiment, since the suction surface 96 is inclined, it is possible to suppress the droplets or foreign matter falling from the suction port filter 89 from entering the inlet flow path 7. According to another embodiment, when the area of the suction port 27 increases, the opening of the suction port filter 89 is set to be small. Therefore, it is possible to suppress the droplets or foreign matter from entering the inlet flow path 7. According to another embodiment, since the suction port filter 89 has a longitudinal direction along the width direction D2, even when icing is formed in a part of the suction port filter 89, an opening area of the remaining part can be maintained at a certain level or more. For this reason, the circulation gas can flow into the inlet flow path forming portion 90 at a low speed, and the pressure loss of the circulation gas can be reduced.

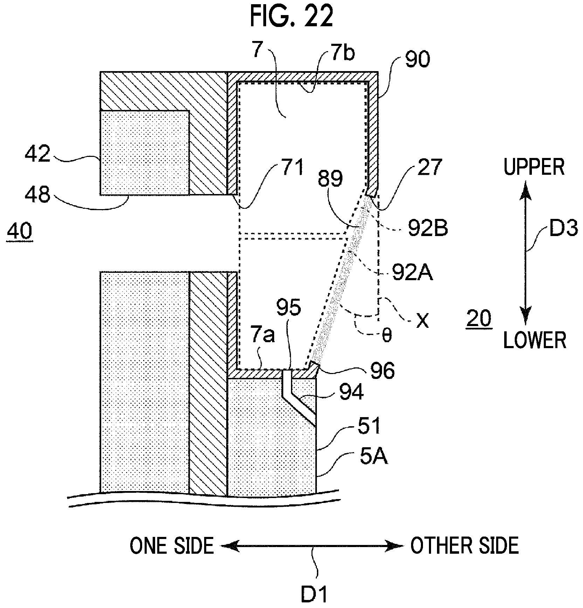

Fig. 22 is a schematic view (as viewed from a side) showing a configuration of an inlet flow path forming portion 90 according to a modification example of another embodiment, and is a view when the inlet flow path forming portion 90 is viewed from the one side in the width direction D2. In the embodiment illustrated in Fig. 22, the opening of the suction port filter 89 is 1.0 mm or less. In this case, the inlet opening filter 93 is not installed in the inlet opening 71 of the inlet flow path 7. According to such a configuration, since the inlet opening filter 93 does not need to be provided, the manufacturing cost and the pressure loss can be reduced.

### (Facing Surface Heat Insulating Material)

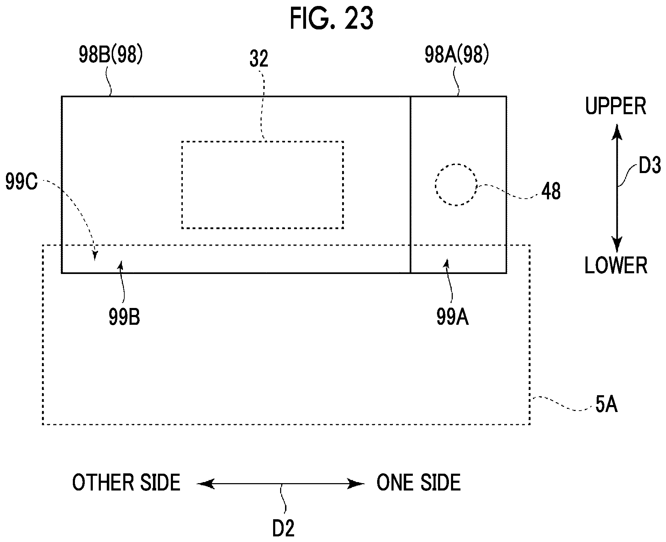

A configuration of a facing surface heat insulating material 98 according to another embodiment will be described. As shown in Fig. 17, in another embodiment, the refrigerated container 1 further includes two facing surface heat insulating materials 98 laminated on a portion 97 of a facing surface 422, which is a surface of the back plate portion 42 on the refrigerator accommodation space 40 side, on a side opposite to the back surface 421 of the back plate portion 42 facing the inlet flow path forming portion 90 (only one facing surface heat insulating material 98 is shown in Fig. 17). Fig. 23 is a view for describing the disposition of two facing surface heat insulating materials 98 according to another embodiment. As illustrated in Fig. 23, the two facing surface heat insulating materials 98 are disposed side by side along the width direction D2 when viewed from the longitudinal direction D1.

One facing surface heat insulating material 98A (98) covers the entire inlet-side communication hole 48 when viewed from the longitudinal direction D1. The other facing surface heat insulating material 98B (98) is located on the other side in the width direction D2 with respect to the one facing surface heat insulating material 98 A. The other facing surface heat insulating material 98B covers the entire heat exchanger 32 when viewed from the longitudinal direction D1.

A lower end portion 99A of the one facing surface heat insulating material 98A overlaps with an upper end portion 99C of the back surface side heat insulating material 5A in the height direction D3. Similarly, a lower end portion 99B of the other facing surface heat insulating material 98B overlaps with the upper end portion 99C of the back surface side heat insulating material 5A in the height direction D3.

The action and effect of the facing surface heat insulating material 98 according to another embodiment will be described. According to another embodiment, by providing the two facing surface heat insulating materials 98 in the portion 97 of the facing surface 422 of the back plate portion 42, the heat insulating properties of the refrigerator 3 can be improved. Further, by separating the one facing surface heat insulating material 98A from the other facing surface heat insulating material 98B covering the entire heat exchanger 32, the deterioration in the heat insulating properties of the other facing surface heat insulating material 98B can be suppressed.

According to another embodiment, the refrigerator 3 is covered with the back surface side heat insulating material 5A, the one facing surface heat insulating material 98A, and the other facing surface heat insulating material 98B in the height direction D3. Therefore, the heat insulating properties of the refrigerator 3 can be improved.

In the present specification, expressions representing relative or absolute dispositions such as "in a certain direction", "along a certain direction", "parallel", "orthogonal", "center", "concentric", and "coaxial" not only strictly represent the dispositions, but also represent a state where the dispositions are relatively displaced with a tolerance or at an angle or a distance to such an extent that the same function can be obtained.

For example, expressions representing that things are in an equal state such as "same", "equal", and "homogeneous" not only strictly represent an equal state, but also represent a state where a difference exists with a tolerance or to such an extent that the same function can be obtained.

Further, in the present specification, expressions representing shapes such as a quadrangular shape and a cylindrical shape not only represent shapes such as a quadrangular shape and a cylindrical shape in a geometrically strict meaning, but also represent shapes including an uneven portion or a chamfered portion within a range where the same effect can be obtained.

Further, in the present specification, expressions such as "being provided with", "including", and "having" one component are not exclusive expressions excluding the presence of other components.

The present disclosure is not limited to the above-described embodiments, and also includes an embodiment in which modifications are added to the above-described embodiments and an embodiment in which the embodiments are combined with each other as appropriate.

The contents described in some embodiments described above are understood as follows, for example.

1) A refrigerated container (1) according to at least one embodiment of the present disclosure includes:
   a container body (2) having a refrigeration space (20) to be cooled inside;
   a refrigerator (3) configured to cool a circulation gas suctioned from the refrigeration space (20);
   a refrigerator casing (4) disposed inside the container body (2) and having a refrigerator accommodation space (40) for accommodating the refrigerator (3) inside; and
   a heat insulating material (5) laminated on an outer wall surface (41) of the refrigerator casing (4), in which
   an outlet flow path (6) for connecting the refrigerator accommodation space (40) and the refrigeration space (20) to each other and guiding the circulation gas cooled in the refrigerator (3) to the refrigeration space (20) via a discharge port (26) is formed inside the heat insulating material (5).

According to the configuration of 1) above, the heat insulating material (5) is disposed between the refrigerator casing (4) and the refrigeration space (20), and the refrigerator (3) that can be a heat source is disposed inside the refrigerator casing (4). In this manner, the heat insulation performance of the refrigeration space (20) can be relatively improved. In a case where the heat insulation performance of the refrigeration space (20) is high, since the thickness of the heat insulating material attached to the inner surface of the container body (2) can be reduced, the refrigeration space (20), which is an internal space of the refrigerated container (1), can be enlarged.

In addition, according to the configuration of 1) above, the outlet flow path (6) is formed inside the heat insulating material (5). In this manner, the heat dissipation of the circulation gas (cold air) flowing through the outlet flow path (6) can be suppressed without separately performing heat insulation construction on the outlet flow path (6). By suppressing the heat dissipation of the circulation gas flowing through the outlet flow path (6), it is possible to suppress the occurrence of unevenness in the temperature distribution of the circulation gas guided to the refrigeration space (20) via the discharge port (26). In addition, by suppressing the heat dissipation of the circulation gas in the outlet flow path (6), it is possible to effectively guide the circulation gas cooled in the refrigerator (3) to the refrigeration space (20).

2) In some embodiments, in the refrigerated container (1) according to 1) above,
an inlet flow path (7) for connecting the refrigerator accommodation space (40) and the refrigeration space (20) to each other and guiding the circulation gas suctioned from the refrigeration space (20) to the refrigerator (3) via a suction port (27) is formed inside the heat insulating material (5).

According to the configuration of 2) above, the inlet flow path (7) is formed inside the heat insulating material (5). In this manner, the heat dissipation of the circulation gas flowing through the inlet flow path (7) can be suppressed. By suppressing the heat dissipation of the circulation gas flowing through the inlet flow path (7), the thermal energy of the circulation gas guided to the refrigerator (3) via the inlet flow path (7) can be effectively utilized as a heating source of the refrigerator (3).

3) In some embodiments, in the refrigerated container (1) according to 1) or 2) above,
the outlet flow path (6) includes, in at least a part, a flow path area expansion portion (62) in which a flow path area increases toward a refrigeration space (20) side.

According to the configuration of 3) above, by providing the flow path area expansion portion (62) in the outlet flow path (6), the opening area required at the discharge port (26) can be secured while suppressing the pressure loss in the outlet flow path (6).

4) In some embodiments, in the refrigerated container (1) according to 3) above,
the flow path area expansion portion (62) of the outlet flow path (6) is provided from an outlet opening (61), which is connected to the refrigerator accommodation space (40) of the outlet flow path (6), to the discharge port (26).

According to the configuration of 4) above, by providing the flow path area expansion portion (62) from the outlet opening (61) of the outlet flow path (6) to the discharge port (26), the thickness of the heat insulating material (5) required to secure the opening area required at the discharge port (26) is reduced. By minimizing the thickness of the heat insulating material (5) the refrigeration space (20) can be enlarged. In addition, according to the configuration of 4) above, since unnecessary bends or the like are not formed in the outlet flow path (6), it is possible to reduce the pressure loss in the outlet flow path (6).

5) In some embodiments, in the refrigerated container (1) according to any one of 1) to 4) above,
the refrigerator casing (4) includes
   a back plate portion (42) that extends along a direction orthogonal to a longitudinal direction of the container body (2) on a refrigeration space (20) side with respect to the refrigerator (3),
   a ceiling plate portion (43) that extends along a direction orthogonal to a height direction of the container body (2) from an upper end portion of the back plate portion (42) and that covers an upper side of the refrigerator (3), and
   a bottom plate portion (44) that extends along the direction orthogonal to the height direction of the container body (2) from a lower end portion of the back plate portion (42) and that covers a lower side of the refrigerator (3), and
the outlet flow path (6) is connected to the refrigerator accommodation space (40) via an outlet-side communication hole (47A) formed in the back plate portion (42).

According to the configuration of 5) above, the outlet flow path (6) is connected to the refrigerator accommodation space (40) via the outlet-side communication hole (47A) formed in the back plate portion (42). In this case, since the length of the pipe in the refrigerator accommodation space (40) for guiding the circulation gas from the refrigerator (3) to the outlet flow path (6) can be made short, the heat dissipation from the pipe can be suppressed. In addition, in a case where the length of the pipe is short, the heat insulation construction for the pipe is facilitated by that amount. In addition, according to the configuration of 5) above, even in a case where the thickness of the heat insulating material covering the lower side of the refrigerator casing (4) is relatively small, the outlet flow path (6) can be formed inside the heat insulating material.

6) In some embodiments, in the refrigerated container (1) according to 5) above,
an inlet flow path (7) for connecting the refrigerator accommodation space (40) and the refrigeration space (20) to each other and guiding the circulation gas suctioned from the refrigeration space (20) to the refrigerator accommodation space (40) via a suction port (27) is formed inside the heat insulating material (5), and
the inlet flow path (7) is connected to the refrigerator accommodation space (40) via an inlet-side communication hole (48A) formed above the outlet-side communication hole (47A) of the back plate portion (42).

According to the configuration of 6) above, the inlet flow path (7) is connected to the refrigerator accommodation space (40) via the inlet-side communication hole (48A) formed above the outlet-side communication hole (47A) of the back plate portion (42). In this case, since the length of the pipe in the refrigerator accommodation space (40) for guiding the circulation gas from the inlet flow path (7) to the refrigerator (3) can be made short, the heat dissipation from the pipe can be suppressed. In addition, according to the configuration of 6) above, even in a case where the thickness of the heat insulating material covering the upper side of the refrigerator casing (4) is relatively small, the inlet flow path (7) can be formed inside the heat insulating material.

7) In some embodiments, in the refrigerated container (1) according to any one of 1) to 4) above,
the refrigerator casing (4) includes
   a back plate portion (42) that extends along a direction orthogonal to a longitudinal direction of the container body (2) on a refrigeration space (20) side with respect to the refrigerator (3),
   a ceiling plate portion (43) that extends along a direction orthogonal to a height direction of the container body (2) from an upper end portion of the back plate portion (42) and that covers an upper side of the refrigerator (3), and
   a bottom plate portion (44) that extends along the direction orthogonal to the height direction of the container body (2) from a lower end portion of the back plate portion (42) and that covers a lower side of the refrigerator (3), and
the outlet flow path (6) is connected to the refrigerator accommodation space (40) via an outlet-side communication hole (47B) formed in the bottom plate portion (44).

According to the configuration of 7) above, the outlet flow path (6) is connected to the refrigerator accommodation space (40) via the outlet-side communication hole (47B) formed in the bottom plate portion (44). In this case, it becomes easy to install the discharge port (26) on the lower side (floor surface side) in the height direction of the container body (2). By making the difference between the discharge port (26) and the suction port (27) in the height direction of the container body (2) large, it is possible to effectively suppress the occurrence of unevenness in the temperature distribution in the height direction of the container body (2) in the refrigeration space (20).

8) In some embodiments, in the refrigerated container (1) according to 7) above,
an inlet flow path (7) for connecting the refrigerator accommodation space (40) and the refrigeration space (20) to each other and guiding the circulation gas suctioned from the refrigeration space (20) to the refrigerator accommodation space (40) via a suction port (27) is formed inside the heat insulating material (5), and
the inlet flow path (7) is connected to the refrigerator accommodation space (40) via an inlet-side communication hole (48B) formed in the ceiling plate portion (43).

According to the configuration of 8) above, the inlet flow path (7) is connected to the refrigerator accommodation space (40) via the inlet-side communication hole (48B) formed in the ceiling plate portion (43). In this case, it becomes easy to install the suction port (27) on the upper side (ceiling surface side) in the height direction of the container body (2).

9) In some embodiments, the refrigerated container (1) according to any one of 1) to 8) above further includes:
at least one laying member (8) that is laid on a floor surface of the refrigeration space (20) of the container body (2) and in which a gas flow path (80) through which a gas flows is formed below an upper surface of the at least one laying member (8), in which
the discharge port (26) is configured to communicate with the gas flow path (80).

According to the configuration of 9) above, the circulation gas (cold air) guided to the gas flow path (80) via the discharge port (26) flows above the upper surface of the laying member (8) after flowing through the gas flow path (80). In this case, since the circulation gas (cold air) guided to the refrigeration space (20) via the discharge port (26) can be guided to a wide range of the refrigeration space (20), even in a case where a load to be cooled is placed on the upper surface of the laying member (8), the entire refrigeration space (20) can be effectively cooled.

10) In some embodiments, in the refrigerated container (1) according to any one of 2), 6), or 8) above,
the discharge port (26) includes
   a first opening portion (261) having a longitudinal direction along a width direction of the container body (2), and
   a first upper opening portion (262) having a longitudinal direction upward from an end portion on one side in the width direction of the first opening portion (261), and
the suction port (27) includes
   a second opening portion (271) having a longitudinal direction along the width direction of the container body (2), and
   a first lower opening portion (272) having a longitudinal direction downward from an end portion on the other side in the width direction of the second opening portion (271).

According to the configuration of 10) above, the discharge port (26) including the first opening portion (261) can introduce the circulation gas into a relatively wide range in the width direction of the refrigeration space (20). The suction port (27) including the second opening portion (271) can suction the internal gas from a relatively wide range in the width direction of the refrigeration space (20). In this manner, it is possible to effectively suppress the occurrence of unevenness in the temperature distribution in the width direction of the refrigeration space (20).

According to the configuration of 10) above, the discharge port (26) including the first upper opening portion (262) can introduce the circulation gas into a relatively wide range in the height direction of the refrigeration space (20). The suction port (27) including the first lower opening portion (272) can suction the internal gas from a relatively wide range in the height direction of the refrigeration space (20). In this manner, it is possible to effectively suppress the occurrence of unevenness in the temperature distribution in the height direction of the refrigeration space (20).

11) In some embodiments, in the refrigerated container (1) according to 10) above,
the discharge port (26) further includes a second upper opening portion (263) having a longitudinal direction upward from an end portion on the other side in the width direction of the first opening portion (261), and
the suction port (27) further includes a second lower opening portion (273) having a longitudinal direction downward from an end portion on the one side in the width direction of the second opening portion (271).

According to the configuration of 11) above, the discharge port (26) including the second upper opening portion (263) can introduce the circulation gas into a relatively wide range in the height direction of the refrigeration space (20). The suction port (27) including the second lower opening portion (273) can suction the internal gas from a relatively wide range in the height direction of the refrigeration space (20). In this manner, it is possible to effectively suppress the occurrence of unevenness in the temperature distribution in the height direction of the refrigeration space (20).

12) In some embodiments, in the refrigerated container (1) according to any one of 5) to 8) above,
the heat insulating material (5) includes
a back surface side heat insulating material (5A) laminated on a back surface which is a surface of the back plate portion (42) on the refrigeration space (20) side,
an upper surface side heat insulating material (5B) laminated on an upper surface of the ceiling plate portion (43), and
a lower surface side heat insulating material (5C) laminated on a lower surface of the bottom plate portion (44).

According to the configuration of 12) above, since the heat insulating material (5) includes the back surface side heat insulating material (5A), the upper surface side heat insulating material (5B), and the lower surface side heat insulating material (5C), the heat input to the refrigerator accommodation space (40) or the heat dissipation from the refrigerator accommodation space (40) can be suppressed. The heat insulating material (5) including the back surface side heat insulating material (5A), the upper surface side heat insulating material (5B), and the lower surface side heat insulating material (5C) can make the shape of the outlet flow path (6) formed inside the heat insulating material (5) appropriate according to the position of the outlet-side communication hole (47A, 47B) or the discharge port (26). The heat insulating material (5) including the back surface side heat insulating material (5A), the upper surface side heat insulating material (5B), and the lower surface side heat insulating material (5C) can be reused in the container body (2) having a different standard size without changing the refrigerator (3) or the refrigerator casing (4) by changing the thickness of each part (5A, 5B, 5C) of the heat insulating material.

13) In some embodiments, in the refrigerated container (1) according to 12) above,
in the heat insulating material (5), each of the back surface side heat insulating material (5A), the upper surface side heat insulating material (5B), and the lower surface side heat insulating material (5C) is configured separately.

According to the configuration of 13) above, by configuring each of the back surface side heat insulating material (5A), the upper surface side heat insulating material (5B), and the lower surface side heat insulating material (5C) separately, each of the parts (5A, 5B, 5C) of the heat insulating material can be brought into close contact with the refrigerator casing (4). Therefore, the leakage of the fluid through the gap between the heat insulating material (5) and the refrigerator casing (4) can be effectively suppressed. In addition, by configuring each of the back surface side heat insulating material (5A), the upper surface side heat insulating material (5B), and the lower surface side heat insulating material (5C) separately, each of the severely damaged or deteriorated parts (5A, 5B, 5C) of the heat insulating material can be replaced alone, and thus the maintainability of the heat insulating material can be improved.

14) In some embodiments, the refrigerated container (1) according to any one of 1) to 13) above further includes:
a metal plate (9) laminated on a surface of the heat insulating material (5) on a refrigeration space (20) side.

According to the configuration of 14) above, since the metal plate (9) can suppress the heat insulating material (5) from being damaged or deteriorated and the function of the heat insulating material (5) from being deteriorated due to a collision of the load during the unloading work or cleaning of the container, the heat insulation performance of the heat insulating material (5) can be maintained for a relatively long period of time. By adopting a metal having a smaller heat capacity than the heat insulating material (5) for the metal plate (9), it is possible to shorten the period required for cooling the refrigeration space (20).

15) In some embodiments, the refrigerated container (1) according to 14) above further includes:
a water-repellent layer (10A) or a waterproof layer (10B) formed between the heat insulating material (5) and the metal plate (9).

According to the configuration of 15) above, since the water-repellent layer (10A) or the waterproof layer (10B) can suppress the deterioration in the function of the heat insulating material (5) due to the heat insulating material (5) being wet by cleaning of the container or the like, the heat insulation performance of the heat insulating material (5) can be maintained for a relatively long period of time.

16) In some embodiments, the refrigerated container (1) according to any one of 1) to 15) above further includes:
an outlet flow path side metal plate (11) laminated on an inner surface of the outlet flow path (6).

According to the configuration of 16) above, the outlet flow path side metal plate (11) laminated on the inner surface of the outlet flow path (6) serves as a reinforcing material, so that the strength of the heat insulating material (5) can be improved. In addition, the outlet flow path side metal plate (11) can suppress damage or deterioration of the inner surface of the outlet flow path (6).

17) In some embodiments, the refrigerated container (1) according to 16) above further includes:
an outlet flow path side water-repellent layer (12A) or an outlet flow path side waterproof layer (12B) formed between the inner surface of the outlet flow path (6) and the outlet flow path side metal plate (11).

According to the configuration of 17) above, the outlet flow path side water-repellent layer (12A) or the outlet flow path side waterproof layer (12B) can suppress condensed water from entering the heat insulating material (5) via the outlet flow path (6) to deteriorate the heat insulation performance of the heat insulating material (5).

18) In some embodiments, the refrigerated container (1) according to 1) above further includes:
at least one laying member (8) that is laid on a floor surface (22) of the refrigeration space (20) of the container body (2) and in which a gas flow path (80) through which a gas flows is formed below an upper surface (8a) of the at least one laying member (8), in which
the refrigerator casing (4) includes
   a back plate portion (42) that extends along a direction orthogonal to a longitudinal direction (D1) of the container body (2) on a refrigeration space (20) side with respect to the refrigerator (3), and
   a bottom plate portion (44) that extends along a direction orthogonal to a height direction (D3) of the container body (2) from a lower end portion of the back plate portion (42) and that covers a lower side of the refrigerator (3), and
the outlet flow path (6) is
   formed with the discharge port (26) configured to communicate with the gas flow path (80) at one end, and
   formed with an outlet opening (61) configured to communicate with an outlet-side communication hole (47) that is formed in the bottom plate portion (44) at the other end.

According to the configuration described in 18) above, the outlet flow path can be formed without passing through the inside of the back plate portion. Therefore, the thickness of the back plate portion can be reduced, and the refrigeration space can be enlarged.

19) In some embodiments, in the refrigerated container (1) according to 18) above,
at least a part (6a1) of an upper surface (6a) of the outlet flow path (6) abuts against an upper surface (8a) of the at least one laying member (8).

According to the configuration described in 19) above, it is possible to prevent the circulation gas (cooled in the refrigerator) from being blown out from the outlet flow path to the refrigeration space without passing through the gas flow path.

20) In some embodiments, in the refrigerated container (1) according to 19) above,
the at least one laying member (8) includes a plurality of rail members that are disposed side by side with a gap (83) therebetween along a width direction (D2) of the container body (2), extend along a longitudinal direction (D1) of the container body (2), and have a cross-sectional shape formed in a T-shape,
the upper surface (6a) of the outlet flow path (6) includes an upper surface inclined portion (6a2) that is inclined downward toward the refrigeration space (20) side, and
one end of the upper surface inclined portion (6a2) on the refrigeration space (20) side is located on the refrigeration space (20) side with respect to one end of the rail member (8) on an outlet flow path (6) side in the longitudinal direction (D1) of the container body (2), and abuts against an upper surface (8a) of the rail member (8).

According to the configuration described in 20) above, even when the frozen matter formed by the freezing of the moisture contained in the circulation air is deposited to block the discharge port of the outlet flow path, the circulation gas can flow into the gas flow path from above the rail member.

21) In some embodiments, in the refrigerated container (1) according to any one of 18) to 20) above,
a lower surface (6b) of the outlet flow path (6) includes a lower surface inclined portion (6b1) that is inclined downward toward the refrigeration space (20) side.

According to the configuration described in 21) above, the circulation air flows through the outlet flow path to approach the direction in which the gas flow path extends. For this reason, the circulation air can smoothly flow into the gas flow path from the outlet flow path.

22) In some embodiments, in the refrigerated container (1) according to 21) above,
a tip (6b2) of the lower surface inclined portion (6b1) on the refrigeration space (20) side is separated from the at least one laying member (8) in the longitudinal direction (D1) of the container body (2), and
the floor surface (221) faces the outlet flow path (6) between the tip (6b2) of the lower surface inclined portion (6b1) and the at least one laying member (8).

According to the configuration described in 22) above, the frozen matter can be deposited on the portion facing the outlet flow path of the floor surface, and it is possible to prevent the discharge port of the outlet flow path from being blocked.

23) In some embodiments, in the refrigerated container (1) according to 22) above,
in a case where a height of the at least one laying member (8) is set to h, and a distance between the at least one laying member (8) and the tip (6b2) of the lower surface inclined portion (6b1) is set to d,
h/2 ≤ d ≤ 2h is satisfied.

According to the configuration described in 23) above, it is possible to form a portion on the floor surface that can prevent the discharge port of the outlet flow path from being blocked due to the frozen matter.

24) In some embodiments, in the refrigerated container (1) according to any one of 18) to 23) above,
the heat insulating material (5) includes a plurality of heat insulating blocks (BL1, BL2), and
the outlet flow path (6) is formed in one of the plurality of heat insulating blocks.

According to the configuration described in 24) above, the outlet flow path is formed inside one heat insulating block. In this manner, compared to a case where the outlet flow path is formed by combining the plurality of heat insulating blocks, the number of heat insulating blocks required to form the outlet flow path can be reduced. In addition, compared to a case where the plurality of heat insulating blocks are combined, the manufacturing error of the outlet flow path can be reduced, and the heat insulating properties can be improved.

25) In some embodiments, in the refrigerated container (1) according to any one of 18) to 24) above,
the refrigerator casing (4) further includes a back plate portion (42) that extends along a direction orthogonal to a longitudinal direction (D1) of the container body (2) on the refrigeration space (20) side with respect to the refrigerator (3), and
the refrigerated container (1) further includes: an inlet flow path forming portion (90) provided on a back surface (421), which is a surface of the back plate portion (42) on the refrigeration space (20) side, and in which an inlet flow path (7) for connecting the refrigerator accommodation space (40) and the refrigeration space (20) to each other and guiding the circulation gas suctioned from the refrigeration space (20) to the refrigerator (3) via a suction port (27) is formed.

According to the configuration described in 25) above, the circulation gas can be smoothly guided to the refrigerator.

26) In some embodiments, in the refrigerated container (1) according to 25) above,
the suction port (27) has a longitudinal direction along a width direction (D2) of the container body (2),
the inlet flow path (7) communicates with the refrigerator accommodation space (40) via an inlet-side communication hole (48) formed in the back plate portion (42),
the inlet-side communication hole (48) is located above a lower surface (7a) of the inlet flow path (7), and
an inlet (95) of a drain hole (94) communicating with the refrigeration space (20) is formed on the lower surface (7a) of the inlet flow path (7).

According to the configuration described in 26) above, even when the droplets are generated in the inlet flow path (for example, even when the ice formed during the cooling operation becomes droplets), the droplets can be discharged from the inlet flow path to the refrigeration space.

27) In some embodiments, the refrigerated container (1) according to 25) or 26) above further includes:
at least one collecting plate (92) provided in the inlet flow path (7) to block a part of a cross section of the inlet flow path (7).

According to the configuration described in 27) above, the foreign matter flowing through the inlet flow path together with the circulation gas collides with the collecting plate, so that it is possible to suppress the foreign matter from entering the refrigerator.

28) In some embodiments, in the refrigerated container (1) according to 27) above,
the at least one collecting plate (92) includes a first collecting plate (92A) that protrudes from a lower surface (7a) of the inlet flow path (7) and a second collecting plate (92B) that protrudes from an upper surface (7b) of the inlet flow path (7), and
the first collecting plate (92A) and the second collecting plate (92B) are disposed side by side along a width direction (D2) of the container body (2).

According to the configuration described in 28) above, it is possible to further suppress the foreign matter from entering the refrigerator.

29) In some embodiments, in the refrigerated container (1) according to any one of 25) to 28) above,
a suction port filter (89) is provided in the suction port (27), and
an inlet opening filter (93) having a smaller opening than the suction port filter (89) is provided in an inlet opening (71) of the inlet flow path (7).

According to the configuration described in 29) above, the pressure loss of the circulation gas guiding to the refrigerator can be reduced while suppressing the foreign matter from entering by removing relatively large foreign matter with the suction port filter and removing relatively small foreign matter with the inlet opening filter.

30) In some embodiments, in the refrigerated container (1) according to 29) above,
the inlet flow path forming portion (90) includes a suction surface (96) on which the suction port (27) is formed, and
the suction surface (96) is inclined to approach the refrigeration space (20) as going upward.

According to the configuration described in 30) above, it is possible to suppress the droplets or foreign matter falling from the suction port filter from entering the inlet flow path.

31) In some embodiments, in the refrigerated container (1) according to 25) above,
a suction port filter (89) having an opening of 1.0 mm or less is provided in the suction port (27), and
a filter is not installed in an inlet opening (71) of the inlet flow path (7).

According to the configuration described in 31) above, since the inlet opening filter does not need to be provided as in 29) above, the manufacturing cost and the pressure loss can be reduced.

32) In some embodiments, the refrigerated container (1) according to any one of 25) to 31) above further includes:
at least two facing surface heat insulating materials (98) laminated on a portion (97) of a facing surface (422), which is a surface of the back plate portion (42) on a refrigerator accommodation space (40) side, on a side opposite to the back surface (421) of the back plate portion (42) facing the inlet flow path forming portion (90), in which
the at least two facing surface heat insulating materials (98) are disposed side by side along a width direction (D2) of the container body (2).

According to the configuration described in 32) above, by providing the two facing surface heat insulating materials in the portion of the facing surface of the back plate portion on a side opposite to the back surface of the back plate portion facing the inlet flow path forming portion, the heat insulating properties of the refrigerator can be improved. Further, by disposing the one facing surface heat insulating material in the vicinity of the outlet (inlet-side communication hole) of the inlet flow path and separating the one facing surface heat insulating material from the other facing surface heat insulating material, the deterioration in the heat insulating properties of the other facing surface heat insulating material can be suppressed.

33) In some embodiments, in the refrigerated container (1) according to 32) above,
the heat insulating material (5) includes a back surface side heat insulating material (5A) laminated on a back surface which is a surface of the back plate portion (42) on the refrigeration space (20) side,
the inlet flow path forming portion (90) is disposed above the back surface side heat insulating material (5A), and
each of the two facing surface heat insulating materials (98A, 98B) has a lower end portion (99A, 99B) overlapping with an upper end portion (99C) of the back surface side heat insulating material (5A) in a height direction (D3) of the container body (2).

According to the configuration described in 33) above, the refrigerator is covered with the back surface side heat insulating material and the two facing surface heat insulating materials in the height direction. Therefore, the heat insulating properties of the refrigerator can be improved.

### Reference Signs List

1: refrigerated container
2: container body
3: refrigerator
4: refrigerator casing
5: heat insulating material
5A: back surface side heat insulating material
5B: upper surface side heat insulating material
5C: lower surface side heat insulating material
5D, 5E: side surface side heat insulating material
6: outlet flow path
6a: upper surface of outlet flow path
6a1: at least part of upper surface of outlet flow path
6a2 upper surface inclined portion
6b: lower surface of outlet flow path
6b1: lower surface inclined portion
6b2: tip of lower surface inclined portion
7: inlet flow path
7a: lower surface of inlet flow path
7b: upper surface of inlet flow path
8: laying member
8a: upper surface of laying member
9: metal plate
10A: water-repellent layer
10B: waterproof layer
11: outlet flow path side metal plate
12A: outlet flow path side water-repellent layer
12B: outlet flow path side waterproof layer
13: inlet flow path side metal plate
14A: inlet flow path side water-repellent layer
14B: inlet flow path side waterproof layer
15: metal filter
20: refrigeration space
21: ceiling wall
22: bottom wall
23, 24: long side wall
25: door
26: discharge port
27: suction port
28: circulation line
28A: suction gas line
28B: compressed gas line
28C: expansion gas line
31: compressor
32: heat exchanger
33: expander
34: cooler
35: liquid coolant circulation line
36: cooling device
37: pump
38: rotary shaft
39: electric motor
40: refrigerator accommodation space
41: outer wall surface
42: back plate portion
43: ceiling plate portion
44: bottom plate portion
45, 46: side plate portion
47, 47A, 47B: outlet-side communication hole
48, 48A, 48B: inlet-side communication hole
61: outlet opening
62, 72: flow path area expansion portion
71: inlet opening
80: gas flow path
83: gap
89: suction port filter
90: inlet flow path forming portion
92: collecting plate
93: inlet opening filter
94: drain hole
95: inlet of drain hole
96: suction surface
97: portion of facing surface of back plate portion
98: facing surface heat insulating material
99A, 99B: lower end portion of facing surface heat insulating material
99C: upper end portion of back surface side heat insulating material
BL1, BL2: heat insulating block

## Claims

1. A refrigerated container comprising:
a container body having a refrigeration space to be cooled inside;
a refrigerator configured to cool a circulation gas suctioned from the refrigeration space;
a refrigerator casing disposed inside the container body and having a refrigerator accommodation space for accommodating the refrigerator inside; and
a heat insulating material laminated on an outer wall surface of the refrigerator casing, wherein
an outlet flow path for connecting the refrigerator accommodation space and the refrigeration space to each other and guiding the circulation gas cooled in the refrigerator to the refrigeration space via a discharge port is formed inside the heat insulating material.

2. The refrigerated container according to Claim 1, wherein
an inlet flow path for connecting the refrigerator accommodation space and the refrigeration space to each other and guiding the circulation gas suctioned from the refrigeration space to the refrigerator via a suction port is formed inside the heat insulating material.

3. The refrigerated container according to Claim 1, wherein
the outlet flow path includes, in at least a part, a flow path area expansion portion in which a flow path area increases toward a refrigeration space side.

4. The refrigerated container according to Claim 3, wherein
the flow path area expansion portion of the outlet flow path is provided from an outlet opening, which is connected to the refrigerator accommodation space of the outlet flow path, to the discharge port.

5. The refrigerated container according to Claim 1, wherein
the refrigerator casing includes
a back plate portion that extends along a direction orthogonal to a longitudinal direction of the container body on a refrigeration space side with respect to the refrigerator,
a ceiling plate portion that extends along a direction orthogonal to a height direction of the container body from an upper end portion of the back plate portion and that covers an upper side of the refrigerator, and
a bottom plate portion that extends along the direction orthogonal to the height direction of the container body from a lower end portion of the back plate portion and that covers a lower side of the refrigerator, and
the outlet flow path is connected to the refrigerator accommodation space via an outlet-side communication hole formed in the back plate portion.

6. The refrigerated container according to Claim 5, wherein
an inlet flow path for connecting the refrigerator accommodation space and the refrigeration space to each other and guiding the circulation gas suctioned from the refrigeration space to the refrigerator accommodation space via a suction port is formed inside the heat insulating material, and
the inlet flow path is connected to the refrigerator accommodation space via an inlet-side communication hole formed above the outlet-side communication hole of the back plate portion.

7. The refrigerated container according to Claim 1, wherein
the refrigerator casing includes
a back plate portion that extends along a direction orthogonal to a longitudinal direction of the container body on a refrigeration space side with respect to the refrigerator,
a ceiling plate portion that extends along a direction orthogonal to a height direction of the container body from an upper end portion of the back plate portion and that covers an upper side of the refrigerator, and
a bottom plate portion that extends along the direction orthogonal to the height direction of the container body from a lower end portion of the back plate portion and that covers a lower side of the refrigerator, and
the outlet flow path is connected to the refrigerator accommodation space via an outlet-side communication hole formed in the bottom plate portion.

8. The refrigerated container according to Claim 7, wherein
an inlet flow path for connecting the refrigerator accommodation space and the refrigeration space to each other and guiding the circulation gas suctioned from the refrigeration space to the refrigerator accommodation space via a suction port is formed inside the heat insulating material, and
the inlet flow path is connected to the refrigerator accommodation space via an inlet-side communication hole formed in the ceiling plate portion.

9. The refrigerated container according to any one of Claims 1 to 8, further comprising:
at least one laying member that is laid on a floor surface of the refrigeration space of the container body and in which a gas flow path through which a gas flows is formed below an upper surface of the at least one laying member, wherein
the discharge port is configured to communicate with the gas flow path.

10. The refrigerated container according to any one of Claims 2, 6, or 8, wherein
the discharge port includes
a first opening portion having a longitudinal direction along a width direction of the container body, and
a first upper opening portion having a longitudinal direction upward from an end portion on one side in the width direction of the first opening portion, and
the suction port includes
a second opening portion having a longitudinal direction along the width direction of the container body, and
a first lower opening portion having a longitudinal direction downward from an end portion on the other side in the width direction of the second opening portion.

11. The refrigerated container according to Claim 10, wherein
the discharge port further includes a second upper opening portion having a longitudinal direction upward from an end portion on the other side in the width direction of the first opening portion, and
the suction port further includes a second lower opening portion having a longitudinal direction downward from an end portion on the one side in the width direction of the second opening portion.

12. The refrigerated container according to any one of Claims 5 to 8, wherein
the heat insulating material includes
a back surface side heat insulating material laminated on a back surface which is a surface of the back plate portion on the refrigeration space side,
an upper surface side heat insulating material laminated on an upper surface of the ceiling plate portion, and
a lower surface side heat insulating material laminated on a lower surface of the bottom plate portion.

13. The refrigerated container according to Claim 12, wherein
in the heat insulating material, each of the back surface side heat insulating material, the upper surface side heat insulating material, and the lower surface side heat insulating material is configured separately.

14. The refrigerated container according to any one of Claims 1 to 8, further comprising:
a metal plate laminated on a surface of the heat insulating material on a refrigeration space side.

15. The refrigerated container according to Claim 14, further comprising:
a water-repellent layer or a waterproof layer formed between the heat insulating material and the metal plate.

16. The refrigerated container according to any one of Claims 1 to 8, further comprising:
an outlet flow path side metal plate laminated on an inner surface of the outlet flow path.

17. The refrigerated container according to Claim 16, further comprising:
an outlet flow path side water-repellent layer or an outlet flow path side waterproof layer formed between the inner surface of the outlet flow path and the outlet flow path side metal plate.

18. The refrigerated container according to Claim 1, further comprising:
at least one laying member that is laid on a floor surface of the refrigeration space of the container body and in which a gas flow path through which a gas flows is formed below an upper surface of the at least one laying member, wherein
the refrigerator casing includes
a back plate portion that extends along a direction orthogonal to a longitudinal direction of the container body on a refrigeration space side with respect to the refrigerator, and
a bottom plate portion that extends along a direction orthogonal to a height direction of the container body from a lower end portion of the back plate portion and that covers a lower side of the refrigerator, and
the outlet flow path is
formed with the discharge port configured to communicate with the gas flow path at one end, and
formed with an outlet opening configured to communicate with an outlet-side communication hole that is formed in the bottom plate portion at the other end.

19. The refrigerated container according to Claim 18, wherein
at least a part of an upper surface of the outlet flow path abuts against an upper surface of the at least one laying member.

20. The refrigerated container according to Claim 19, wherein
the at least one laying member includes a plurality of rail members that are disposed side by side with a gap therebetween along a width direction of the container body, extend along a longitudinal direction of the container body, and have a cross-sectional shape formed in a T-shape,
the upper surface of the outlet flow path includes an upper surface inclined portion that is inclined downward toward the refrigeration space side, and
one end of the upper surface inclined portion on the refrigeration space side is located on the refrigeration space side with respect to one end of the rail member on an outlet flow path side in the longitudinal direction of the container body, and abuts against an upper surface of the rail member.

21. The refrigerated container according to any one of Claims 18 to 20, wherein
a lower surface of the outlet flow path includes a lower surface inclined portion that is inclined downward toward the refrigeration space side.

22. The refrigerated container according to Claim 21, wherein
a tip of the lower surface inclined portion on the refrigeration space side is separated from the at least one laying member in the longitudinal direction of the container body, and
the floor surface faces the outlet flow path between the tip of the lower surface inclined portion and the at least one laying member.

23. The refrigerated container according to Claim 22, wherein
in a case where a height of the at least one laying member is set to h, and a distance between the at least one laying member and the tip of the lower surface inclined portion is set to d,
h/2 ≤ d ≤ 2h is satisfied.

24. The refrigerated container according to any one of Claims 18 to 20, wherein
the heat insulating material includes a plurality of heat insulating blocks, and
the outlet flow path is formed in one of the plurality of heat insulating blocks.

25. The refrigerated container according to any one of Claims 18 to 20, wherein
the refrigerator casing further includes a back plate portion that extends along a direction orthogonal to a longitudinal direction of the container body on the refrigeration space side with respect to the refrigerator, and
the refrigerated container further comprises: an inlet flow path forming portion provided on a back surface, which is a surface of the back plate portion on the refrigeration space side, and in which an inlet flow path for connecting the refrigerator accommodation space and the refrigeration space to each other and guiding the circulation gas suctioned from the refrigeration space to the refrigerator via a suction port is formed.

26. The refrigerated container according to Claim 25, wherein
the suction port has a longitudinal direction along a width direction of the container body,
the inlet flow path communicates with the refrigerator accommodation space via an inlet-side communication hole formed in the back plate portion,
the inlet-side communication hole is located above a lower surface of the inlet flow path, and
an inlet of a drain hole communicating with the refrigeration space is formed on the lower surface of the inlet flow path.

27. The refrigerated container according to Claim 25, further comprising:
at least one collecting plate provided in the inlet flow path to block a part of a cross section of the inlet flow path.

28. The refrigerated container according to Claim 27, wherein
the at least one collecting plate includes a first collecting plate that protrudes from a lower surface of the inlet flow path and a second collecting plate that protrudes from an upper surface of the inlet flow path, and
the first collecting plate and the second collecting plate are disposed side by side along a width direction of the container body.

29. The refrigerated container according to Claim 25, wherein
a suction port filter is provided in the suction port, and
an inlet opening filter having a smaller opening than the suction port filter is provided in an inlet opening of the inlet flow path.

30. The refrigerated container according to Claim 29, wherein
the inlet flow path forming portion includes a suction surface on which the suction port is formed, and
the suction surface is inclined to approach the refrigeration space as going upward.

31. The refrigerated container according to Claim 25, wherein
a suction port filter having an opening of 1.0 mm or less is provided in the suction port, and
a filter is not installed in an inlet opening of the inlet flow path.

32. The refrigerated container according to Claim 25, further comprising:
at least two facing surface heat insulating materials laminated on a portion of a facing surface, which is a surface of the back plate portion on a refrigerator accommodation space side, on a side opposite to the back surface of the back plate portion facing the inlet flow path forming portion, wherein
the at least two facing surface heat insulating materials are disposed side by side along a width direction of the container body.

33. The refrigerated container according to Claim 32, wherein
the heat insulating material includes a back surface side heat insulating material laminated on a back surface which is a surface of the back plate portion on the refrigeration space side,
the inlet flow path forming portion is disposed above the back surface side heat insulating material, and
each of the two facing surface heat insulating materials has a lower end portion overlapping with an upper end portion of the back surface side heat insulating material in a height direction of the container body.
